# EUROPÄISCHE PATENTSCHRIFT

(11) **EP 1 407 348 B1**
(45) Veröffentlichungstag und Bekanntmachung des Hinweises auf die Patenterteilung: **01.02.2006**
(21) Anmeldenummer: 02740726.1
(22) Anmeldetag: 17.06.2002
(51) Int. Cl.: G06F 9/38, G06F 9/355

(54) **VERFAHREN ZUM ANSTEUERN EINER ZENTRALEN VERARBEITUNGSEINHEIT FÜR EINE ADRESSIERUNG BEZÜGLICH EINES SPEICHERS UND CONTROLLER**
METHOD FOR CONTROLLING A CENTRAL PROCESSING UNIT FOR AN ADDRESSING RELATING TO A MEMORY AND A CONTROLLER
PROCEDE DE COMMANDE D'UNE UNITE DE TRAITEMENT CENTRALE POUR UN ADRESSAGE RELATIF A UNE MEMOIRE ET UN PROCESSEUR

(30) Priorität: 18.07.2001 EP 01117389
(43) Veröffentlichungstag der Anmeldung: 14.04.2004
(73) Patentinhaber: Infineon Technologies AG, 81669 München (DE)
(72) Erfinder: FREIWALD, Juergen, 85658 Egmating (DE); RABE, Dirk, 81825 München (DE)
(74) Vertreter: Stöckeler, Ferdinand
(86) Internationale Anmeldenummer: PCT/EP2002/006655
(87) Internationale Veröffentlichungsnummer: WO 2003/009133

(56) Entgegenhaltungen:
- WO-A-00/55723
- WO-A-83/00240
- US-A- 5 485 624
- US-A- 6 023 750
- US-A- 6 026 478

## Beschreibung

Die vorliegende Erfindung bezieht sich auf Controller, wie z.B. Mikrocontroller, Mikroprozessoren und dergleichen, wie sie beispielsweise bei ASICs (ASIC = application specific integrated circuit = anwendungsspezifische integrierte Schaltung), SOCs (SOC = system on chip = Einchipsystem) oder dergleichen verwendet werden, und insbesondere auf Controller, die auf einer CPU-Architektur (CPU = central processing unit = zentrale Verarbeitungseinheit) basieren, die eine Adressierung einer benötigten Speichergröße nicht unterstützen.

Obwohl die Entwicklung von Mikroprozessoren und Mikrocontrollern zu erheblichen Leistungssteigerungen geführt hat, erhalten auf bestimmten technischen Anwendungsgebieten, wie z.B. im Chipkartenbereich oder bei SOC-Entwürfen, dennoch ältere CPU-Architekturen den Vorzug über neuere Architekturen bei der Integration einer CPU in eine integrierte Schaltung. Ein Grund hierfür besteht darin, daß neuere CPU-Architekturen mit einer höheren Leistungsfähigkeit häufig für das jeweilige vorgesehene Anwendungsgebiet überdimensioniert und somit in Hinblick auf die durchzuführenden Aufgaben zu viel Leistung benötigen und zu viel Chipfläche einnehmen. Ein weiterer Grund, eine ältere CPU-Architektur einer neueren, leistungsfähigeren vorzuziehen, besteht darin, daß die Softwareentwicklungsumgebung für die älteren CPU-Architekturen, wie z.B. die 8051- oder 8052-basierte Mikrocontrollerarchitektur, bei den Kunden häufig beliebter ist, und daß für dieselben mehr Softwareentwickler zur Verfügung stehen.

Das Problem der beim Kunden beliebteren Softwareentwicklungsumgebung für ältere Controller-Architekturen ist insbesondere im Chipkartenbereich bedeutend, da hier die Erzeugung der auf der Chipkarte abarbeitungsfähigen Maschinenprogramme bzw. der lauffähigen Maschinencodes nicht in das Aufgabengebiet des Chipherstellers fällt, sondern vielmehr aus Sicherheitsgründen den Großkunden, wie z.B. Banken, und deren Softwareentwicklungsfirmen sowie der jeweiligen Betriebssystementwicklungsfirma obliegt. Ferner ist es aufgrund der hohen benötigten Stückzahlen für die Chipkartenkunden von enormer Bedeutung, den jeweiligen Anforderungen angepaßte Chipkartencontroller zu verwenden, um die Kosten möglichst gering zu halten. Der Chipkartenhersteller muß folglich, sowohl um den Low-End-Chipkartenbereich zufrieden zu stellen, als auch um den Wunsch einiger Kunden nach bekannten Softwareentwicklungsumgebungen nachzukommen, Chipkarten anbieten können, die auf einer älteren Mikrocontrollerarchitektur basieren.

Ein Problem bei der Verwendung von älteren Controller-Architekturen bei der Chipkartenherstellung besteht jedoch darin, daß die Adressierungsmöglichkeiten derselben nicht ausreichend sind. So reicht im Chipkartenbereich zwar die Leistungsfähigkeit einer 8051-basierten CPU grundsätzlich aus, um die Verwaltungsaufgaben einer Chipkarte zu übernehmen, aber aus Gründen der hohen Sicherheitsanforderungen müssen auf der Chipkarte von Kryptocoprozessoren Kryptographiealgorithmen abgearbeitet werden, die Rechenoperationen bezüglich sehr großer Operanden umfassen. Bei dem bekannten RSA-(Rivest, Sharmir und Adleman) Algorithmus sind beispielsweise Operandenlängen von 1024 üblich. Aufgrund dieser großen zu verarbeitenden Operandenlängen sowie der Komplexität der Kryptographiealgorithmen selbst, ist bei Chipkarten der Zugriff auf einen möglichst großen Speicher erforderlich. Das Problem bei der Verwendung von CPUs, die auf älteren Controllerarchitekturen bestehen, besteht hierbei darin, daß dieselben die Adressierung lediglich kleiner Speichergrößen zulassen. 8051-basierte CPUs ermöglichen beispielsweise lediglich die Adressierung von 64kByte.

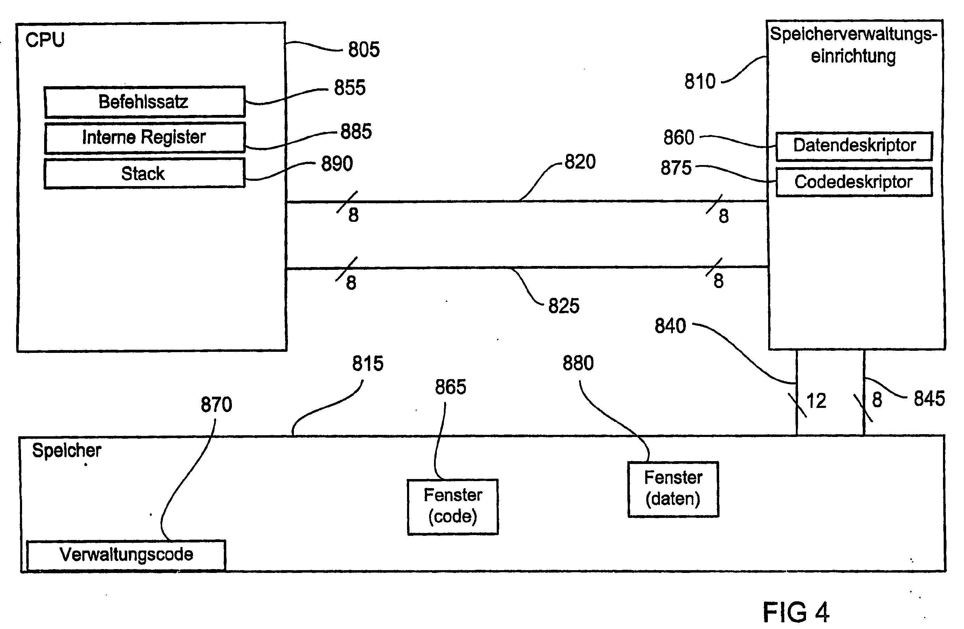

Ein möglicher Lösungsansatz, um trotz der Verwendung eines Controllers älterer Architektur einer großen Speicher adressierbar zu machen, besteht darin, extern gespeicherte Deskriptoren bzw. Basisadressen zu verwenden, die die Lage eines durch die CPU adressierten Speicherfensters festlegen, so daß der durch die CPU adressierbare Speicherbereich mittels des Speicherfensters über den gesamten größeren Speicher verschiebbar ist. Fig. 4 zeigt ein Blockschaltbild eines 8-Bit-Controllers, der allgemein mit 800 angezeigt ist und aus einer 8051-basierten CPU 805 und einer MMU (MMU = memory management unit = Speicherverwaltungseinheit) besteht, sowie einen mit dem Controller 800 verbundenen Speicher 815, der sich aus verschiedenen Speichertypen zusammensetzen kann, wie z.B. einem Nur-Lese-Speicher (ROM), einem Direktzugriffsspeicher (RAM), einem nicht flüchtigen Speicher (NVM = non-volatile memory), wie z.B. einem EEPROM oder einem Flash-Speicher, oder dergleichen, und lediglich zum besseren Verständnis als ein Block dargestellt ist. Die CPU 805 ist über eine 8-Bit-Adreßleitung 820 und eine bidirektionale 8-Bit-Datenleitung 825 mit der MMU 810 verbunden, die wiederum über eine 12-Bit-Adreßleitung 840 und eine bidirektionale 8-Bit-Datenleitung 845 mit dem Speicher 815 verbunden ist. In dem Fall einer Chipkarte ist der Controller 800 beispielsweise mit weiteren Komponenten, wie z.B. einem Kryptocoprozessor zur Durchführung von Kryptographiealgorithmen, einem Interruptmodul, einer kontaktbehafteten oder kontaktlosen Schnittstelle zur Durchführung der Kommunikation mit einem Terminal, einem Zufallszahlengenerator und weiteren Komponenten verbunden, die in Fig. 4 zur Vereinfachung der Darstellung nicht gezeigt sind.

Ein Problem bei dem Controller 800 von Fig. 4 besteht darin, daß die CPU 805 auf einer 8-Bit-Architektur basiert und im Rahmen ihres Befehlssatzes 855 lediglich eine Adressierung von 64 kByte zuläßt, während die Größe des Speichers 815 in dem Fall einer Chipkarte größer bemessen sein muß, und in dem Beispiel von Fig. 4 beispielsweise ein Megabyte beträgt. Der Grund dafür, daß für die CPU 805 lediglich 64 kByte adressierbar sind, besteht darin, daß bei Datenzugriffen mittels des Befehlssatzes 855 und insbesondere mittels der Lese/Schreib-Befehle, wie z.B. der MOV-Befehle, und bei Codezugriffen zur Erzeugung einer Adresse lediglich 2 Byte (16 Bit) verwendet werden, die lediglich eine Codierung von 2¹⁶ = 64k Zuständen ermöglichen.

Bei Ausführung eines Lese-Befehls gibt die CPU 805 die 16-Bit-Adresse auf der 8-Bit-Adreßleitung 820 und der 8-Bit-Datenleitung 825 aus. Als Antwort erwartet die CPU 805 auf den Datenleitungen 825 den Speicherinhalt des Speichers 815 an der angeforderten Adresse. Um die Adressierung des 1-MB-Speichers 815 zu ermöglichen, ist außerhalb der CPU 805 in der MMU 810 ein Datendeskriptor 860 gespeichert, der eine Basisadresse angibt, die zu der 16-Bit-Adresse von der CPU 805 addiert wird, woraufhin das Ergebnis auf der 12-Bit-Adreßleitung 840 und der 8-Bit-Datenleitung 845 zur Adressierung an den Speicher 815 ausgegeben wird. Auf diese Weise wird durch den Deskriptor 860 ein 64k Datenspeicherfenster 865 in dem Speicher 815 definiert, dessen Startadresse der durch den Deskriptor 860 angegebenen Basisadresse entspricht. Durch Vorsehen des Deskriptors 860 und der MMU 810 wird sichergestellt, daß die CPU 805 bei Speicherzugriffen bezüglich des Speichers 815 immer auf das Speicherfenster 865 zugreift, wobei die von der CPU 805 ausgegebene Adresse den Versatz des zu lesenden Bytes innerhalb des Speicherfensters 875 angibt. Die CPU 805 führt einen Schreib- oder Lesebefehl aus, wobei die MMU 810 die 16-Bit-Adresse von der CPU 805 in eine physikalische 20-Bit-Adresse übersetzt und den Zugriff entsprechend umlenkt.

Obwohl das Konzept des Deskriptors 860 in Verbindung mit der MMU 810 auf beliebige Speichergrößen erweiterbar ist, ist dasselbe dahingehend nachteilhaft, daß bei Speicherzugriffen auf Adressen des Speichers 815 außerhalb des Speicherfensters 865 zuvor die MMU 810 umkonfiguriert werden muß, d.h. der Deskriptor 860 entsprechend neu eingestellt werden muß. Diese Umkonfigurierung der MMU 810 ist insbesondere deshalb aufwendig, da sie eine softwaremäßige Einstellung des Deskriptors 860 erfordert, und da in einem für die CPU 805 ständig sichtbaren (d. h. adressierbaren) Speicher ein Verwaltungscode 870 gespeichert sein muß, der einen MMU-Einstellungscode zur Einstellung des Deskriptors 860 umfaßt, was den zumeist ohnehin knapp bemessenen direkt adressierbaren Speicher verringert. Außerdem benötigt das Einstellen des Deskriptors 860 zusätzliche Taktzyklen, was die Arbeitsgeschwindigkeit des Controllers verringert. Unter Annahme der oben angegebenen Speichergrößen beträgt die Zeitdauer für einen Datenzugriff auf eine Speicheradresse des Speichers 815 außerhalb des Speicherfensters 865 für ein kompiliertes Programm beispielsweise 140 Taktzyklen gegenüber 4 Taktzyklen für Speicherzugriffe innerhalb des aktuellen Speicherfensters 865.

Das Problem der MMU-Umkonfigurierung vergrößert sich im Bereich der Codezugriffe, bei denen auf entsprechende Weise ein Codedeskriptor 875 ein Codespeicherfenster 880 definiert, dadurch, daß bei Ausführung von Unterprogrammen, d.h. Call-Befehlen, in Speicherbereichen außerhalb des Speicherfensters 880 der Rücksprung in das aktuell eingestellte Speicherfenster 880 sichergestellt sein muß. Während also bei Verlassen des aktuell eingestellten Speicherfensters 880 während der Abarbeitung des Maschinencodes in der normalen Befehlssequenz, d.h. bei Nicht-Vorliegen eines Sprungbefehls, oder bei Sprungbefehlen ohne Rückkehrabsicht, wie bei Datenzugriffen lediglich der Codedeskriptor 875 neu eingestellt werden muß, muß bei Sprungbefehlen mit Rückkehrabsicht sichergestellt werden, daß in dem Fall des Rücksprungs der Codedeskriptor 875 auf den ursprünglichen Wert eingestellt wird. Um dies sicherzustellen, muß der Verwaltungscode 870 ferner einen Initialisierungscode aufweisen, der bei jedem Sprungbefehl mit Rückkehrabsicht bezüglich eines Zieles außerhalb des aktuell eingestellten Codespeicherfensters 880 aufgerufen wird, um sicherzustellen, daß beim Rücksprung die Deskriptoreinstellungen vor dem Sprung wiederhergestellt werden.

Eine mögliche softwaremäßige Realisierung besteht darin, für jede Bank, d.h. jede mögliche Speicherfensterposition, des Speichers 815 einen Initialisierungscode und einen Einstellungs- und Rückstellungscode vorzusehen, die in einer Tabelle organisiert und in dem ständig sichtbaren Speicherbereich des Speichers 815 gespeichert sind. Um einen Sprungbefehl mit Rückkehrabsicht über die Grenzen des aktuell eingestellten Speicherfensters 865 hinaus durchzuführen, muß aus dem Programmcode zunächst ein Sprungbefehl mit Rückkehrabsicht in eine Funktion in dem ständig sichtbaren Speicherbereich erfolgen, die in ein internes Registers 885, wie z.B. einen Datenzeiger DPTR, die 16-Bit-Adresse des Zielcodes bezüglich der Zielbank, d.h. den Versatz innerhalb der Zielbank, wo der angesprungene Befehl liegt, lädt, und daraufhin den Initialisierungscode mit einem Sprungbefehl ohne Rückkehrabsicht in den ständig sichtbaren Speicherbereich aufruft. Durch Ausführung des Initialisierungscodes wird zunächst die Adresse des MMU-Rückstellungscodes zur Wiederherstellung des aktuell eingestellten Fensters 880 bzw. der aktuellen Bank auf einen Stack bzw. Stapelspeicher 890 geschoben, dann die zuvor in das interne Register 885 geschriebene Adresse auf den Stack 880 geschoben, und abschließend der MMU-Einstellungscode für die neue Ziel-MMU-Bank durch einen Sprungbefehl ohne Rückkehrabsicht aufgerufen. Am Ende des Einstellungscodes wird nach vollzogener MMU-Umkonfigurierung mit einem Rücksprungbefehl die gewünschte Funktion bzw. das gewünschte Unterprogramm in dem neu eingestellten Speicherfenster angesprungen. Nach Abarbeitung der Funktion wird durch ein Rücksprungbefehl der MMU-Rückstellungscode zum Wiederherstellen der ursprünglichen MMU-Konfigurierung bzw. zum Wiedereinstellen des ursprünglich eingestellten Speicherfensters 880 aufgerufen, um die ursprüngliche MMU-Einstellung wiederherzustellen. Der Rücksprungbefehl am Ende des Rückstellungscodes springt daraufhin innerhalb des wieder eingestellten Speicherfensters 885 an die entsprechende Folgestelle in dem Programmcode. Um mittels der in dem MMU-Einstellungs- bzw. Rückstellungscode enthaltenen CPU-Befehlen die MMU 810 umstellen zu können, können entweder spezielle Befehle vorgesehen sein, mit denen die CPU 805 die MMU 810 bzw. die Deskriptoren 860 und 875 adressieren kann, oder die MMU 810 spricht auf reservierte 8-Bit-Adressen von der CPU 805 auf den Adreß- und Datenleitungen 820 und 825 an.

Um einen für die CPU 805 ständig adressierbaren bzw. sichtbaren Speicherbereich innerhalb des Speichers 815 zu realisieren, werden nicht alle von der CPU 805 ausgegebenen 16-Bit-Adressen durch die MMU 810 in das Speicherfenster 865 abgebildet, sondern in einem festen Speicherbereich des Speichers 815, so daß sich die effektiv adressierbare Größe des Speicherfensters 865 durch den Verwaltungscode 870 reduziert.

Das Dokument DE-A-43 40 551 beschreibt eine Behandlung von Sprungbefehlen im Rahmen einer Adressierungser weiterung einer zentralen Verarbeitungseinheit.

Die Aufgabe der vorliegenden Erfindung besteht darin, ein Verfahren zum Ansteuern einer zentralen Verarbeitungseinheit zur Adressierung bezüglich eines Speichers und einen Controller zu schaffen, so daß die Adressierung von Speichergrößen, die über die durch die CPU aufgrund ihrer Architektur maximal adressierbare Speichergröße hinausgehen, unaufwendiger ist.

Diese Aufgabe wird durch ein Verfahren gemäß Anspruch 1 oder 9 und einen Controller gemäß Anspruch 2 oder 10 gelöst.

Der vorliegenden Erfindung liegt die Erkenntnis zugrunde, daß freie CPU-Operationscodes der CPU, d.h. Operationscodes, denen noch kein Befehl des Befehlssatzes der CPU zugewiesen ist, und die im folgenden als Frei-Operationscodes bezeichnet werden, oder aber CPU-Operationscodeidentifikatoren, denen zwar bereits ein Befehl zugewiesen ist, aber aus einem anderen Grund verwendbar oder in Hinblick auf bestimmte Operanden frei sind, verwendet werden können, um eine der CPU vorgeschaltete Unterstützungseinrichtung anzusteuern, die in der Lage ist, ansprechend auf diese allgemein mit Spezial-Operationscodeidentifikatoren bezeichneten Operationscodeidentifikatoren eine neue, beispielsweise physikalische, Adresse bezüglich eines zweiten Speicherbereichs mit einer zweiten Speichergröße zu bilden, die größer als die durch die CPU adressierbare, beispielsweise logische, Speichergröße ist. Mittels der Spezial-Operationscodeidentifikatoren ist es hierdurch im Rahmen eines ablauffähigen Maschinencodes möglich, die Unterstützungseinrichtung anzusprechen, die den Datenverkehr von dem Speicher zu der CPU überwacht, über den die abzuarbeitenden Operationscodeidentifikatoren zu der CPU geliefert werden, und die bei Auftreten bestimmter Spezial-Operationscodeidentifikatoren Maßnahmen bezüglich der gebildeten neuen Adresse treffen kann. Auf diese Weise wird einerseits ein aufwendiges Redesign bzw. ein aufwendiger Neuentwurf der CPU und andererseits die Notwendigkeit für eine sowohl in Hinblick auf den lauffähigen Maschinencode als auch die Abarbeitungsgeschwindigkeit aufwendige softwaremäßige Umstellung des aktuellen Speicherfensters vermieden.

Gemäß einem Aspekt der vorliegenden Erfindung, der sich auf Programmsprünge bezieht, ist die Unterstützungseinrichtung in der Lage, zu der CPU einen Operationscodeidentifikator, der einem Sprungbefehl aus dem Befehlssatz der CPU zugewiesen ist, zu liefern. Der Sprungbefehl-Operationscodeidentifikator enthält eine geeignete Zieladresse bezüglich des ersten, z.B. logischen, Speicherbereichs, um einen Programmzähler geeignet einzustellen. Die Unterstützungseinrichtung verwaltet gleichzeitig einen Deskriptor der MMU, der die Lage des ersten Speicherbereichs innerhalb des Speicherbereichs angibt, bzw. der derart eingestellt ist, daß die Zieladresse zusammen mit dem Codedeskriptor die neue Adresse ergibt. Der der CPU zugeführte Sprungbefehl bezieht sich auf eine Zieladresse bezüglich des ersten Speicherbereichs. Die Unterstützungseinrichtung stellt die Zieladresse, auf die sich der Sprungbefehl bezieht, und den Codedeskriptor derart ein, daß sich die neue Adresse in dem ersten, z.B. logischen, Speicherbereich befindet, und damit die Zieladresse, auf die sich der der CPU zugeführte Sprungbefehl bezieht, in Verbindung mit dem Deskriptor der neuen, z.B. physikalischen, Adresse entspricht. Auf diese Weise stellt die Unterstützungseinrichtung ansprechend auf lediglich einen Spezial-Operationscodeidentifikator sicher, daß einerseits der Deskriptor und andererseits der Programmzähler für den nächsten Codezugriff der CPU, um den nächsten abzuarbeitenden Operationscodeidentifikator von dem Speicher anzufordern, geeignet eingestellt sind, wozu bei der in der Beschreibungseinleitung dargestellten softwaremäßigen Lösung ein Verwaltungscode erforderlich wäre.

Gemäß einem anderen Aspekt der vorliegenden Erfindung, der sich auf einen Datenzugriffsbefehl bezieht, ist die Unterstützungseinrichtung in der Lage, der CPU einen vorbestimmten CPU-Operationscode zuzuführen, um dieselbe geeignet zu "stimulieren", oder in einen geeigneten Zustand zu versetzen, und eine Adresse, die die CPU an den Speicher ausgibt, basierend auf der gebildeten neuen Adresse zu manipulieren, damit sich aus der Sicht des Speichers der Eindruck ergibt, die CPU wäre zur Adressierung des zweiten Speicherbereiches fähig. In dem Fall, daß während eines Programms der Inhalt an einer bestimmten Adresse des Speichers außerhalb des eingestellten Speicherfensters bzw. ersten Speicherbereiches gelesen werden soll, also bezüglich des zweiten Speicherbereiches, kann beispielsweise in den abarbeitungsfähigen Maschinencode ein hierfür vorgesehener freier Operationscode eingefügt werden. Wenn derselbe von der CPU als nächster zu verarbeitender Befehl vom Speicher angefordert wird, spricht die Unterstützungseinrichtung an, um beispielsweise aus entweder einem Teil des Operationscodes selbst oder aus Registerinformationen innerhalb der CPU oder aus Registerinformationen extern der CPU, in beispielsweise der Unterstützungseinrichtung, eine neue Adresse zu ermitteln. An dieser wird der Speicher ausgelesen. Ferner werden der CPU einer oder mehrere CPU-Operationscodes zugeführt, damit die CPU einen anschließend zugeführten Speicherinhalt in ein gewünschtes Zielregister in der CPU einträgt. Außerdem wird der Programmzähler zum Anzeigen des nächsten auszuführenden Operationscodes in den Speicher geeignet eingestellt, damit mit der neuen Adresse auf den Speicher zugegriffen werden kann, damit der Speicherinhalt der neuen Adresse gelesen und derselbe an die CPU ausgegeben werden kann. Auch in dem Fall von Datenzugriffen ist folglich kein Verwaltungscode erforderlich, um den ersten Speicherbereich bzw. ein eingestelltes Speicherfenster zuvor zu verschieben.

Durch das Vorsehen der Verwendung der freien Operationscodes oder Spezial-Operationscodeidentifikatoren, um eine Unterstützungseinrichtung anzusteuern, die die neuen Adressen au-ßerhalb der CPU bildet, kann vorteilhafter Weise eine direkte Adressierung des gesamten Speichers über den durch die CPU mit dem CPU-Operationscodeidentifikatoren direkt adressierbaren Speicherbereich hinaus erzielt werden, ohne wesentliche Eingriffe an dem Aufbau der CPU vornehmen zu müssen. Indem die Unterstützungseinrichtung der CPU vorgeschaltet ist, d.h. mit der CPU derart verbunden ist, daß dieselbe den Datenverkehr von dem Speicher zu der CPU überwachen kann, können die beispielsweise die freien Operationscodeidentifikatoren, die keinem Befehl aus dem Befehlssatz der CPU zugewiesen sind, von der Unterstützungseinrichtung abgefangen werden, noch bevor dieselben die CPU erreichen. Auf der Basis der durch die Unterstützungseinrichtung gebildeten neuen Adresse, auf die sich der freie Operationscode bezieht, kann die Unterstützungseinrichtung die CPU geeignet stimulieren bzw. ansteuern und gegebenenfalls die Adreßsignale der CPU nach außen hin, d.h. gegenüber dem Speicher, geeignet manipulieren. Eine vorbereitende softwaremäßige Umstellung eines Deskriptors bzw. einer Basisadresse ist nicht erforderlich, wodurch einerseits das Vorsehen eines Verwaltungscodes entfällt und andererseits die Anzahl der Taktzyklen reduziert wird, die ein Codesprung oder ein Datenzugriff aus einem aktuell eingestellten Speicherfenster heraus benötigt. Durch den Wegfall des Verwaltungscodes wird zudem kein Speicherplatz in dem ständig adressierbaren bzw. für die CPU sichtbaren Speicherbereich belegt.

Ein weiterer Vorteil der vorliegenden Erfindung besteht darin, daß eine Abwärtskompatibilität zu Maschinencodes, die lediglich auf dem CPU-Operationscodeidentifikatoren basieren, gewährleistet werden kann, da die Unterstützungseinrichtung für CPU-Operationscodeidentifikatoren durchlässig bzw. unmerklich sein kann. Zusätzlich kann die Unterstützungseinrichtung dazu vorgesehen sein, bei Datenzugriffen und Sprungbefehlen bezüglich Adressen, die sich außerhalb des aktuell eingestellten Speicherfensters befinden, einen Codedeskriptor bzw. Datendeskriptor neu einzustellen, so daß durch lediglich einen Frei- oder Spezial-Operationscodeidentifikator eine Neueinstellung eines Speicherfensters erzielt werden kann. Durch die hardwaremäßige Verarbeitung der freien oder Spezial-Operationscodeidentifikatoren außerhalb der CPU können zusätzlich Unterbrechungen bzw. Interrupts während beispielsweise der Umstellung der Deskriptoren verhindert werden, so daß im Vergleich zu der softwaremäßigen Umstellung die Störanfälligkeit reduziert ist.

Bevorzugte Ausführungsbeispiele der vorliegenden Erfindung werden nachfolgend bezugnehmend auf die beiliegenden Zeichnungen näher erläutert. Es zeigen:
- Fig. 1: ein Blockschaltbild eines Controllers gemäß einem Ausführungsbeispiel der vorliegenden Erfindung;
- Fig. 2a: und 2b ein Flußdiagramm, das die Schritte zeigt, die bei dem Controller von Fig. 1 in dem Fall durchgeführt werden, daß ein freier Operationscode einem Lese-Befehl mit indirekter Adressierung entspricht;
- Fig. 3: ein Flußdiagramm, das die Schritte zeigt, die bei dem Controller von Fig. 1 durchgeführt werden, falls der freie Operationscode einem Sprungbefehl mit direkter Adressierung mit Rückkehrabsicht entspricht; und
- Fig. 4: ein Blockdiagramm eines Controllers, der eine bisherige mögliche Lösung verwendet, um die Adressierungsmöglichkeiten einer CPU zu erweitern.

Bezug nehmend auf die nachfolgende detaillierte Beschreibung eines Ausführungsbeispiels der vorliegenden Erfindung wird darauf hingewiesen, daß sich dieselbe auf den Controller einer Chipkarte bezieht, obwohl die vorliegende Erfindung auch auf Controller bei anderen Anwendungsgebieten angewendet werden kann, wie z.B. bei ASICs, SOCs oder TPMs (trusted plattform module = Sicherheitsplattformmodul), oder als einzelner Mikrocontrollerbaustein ausgeführt sein kann.

Ferner wird darauf hingewiesen, daß die folgenden Ausführungsbeispiele lediglich auf freien, nicht reservierten Frei-Operationscodes beruhen, denen kein Befehl eines Befehlssatzes der CPU zugewiesen ist. Es sei aber darauf hingewiesen, daß es ebenfalls möglich ist, bei alternativen Ausführungsformen zur Ansteuerung der Unterstützungseinrichtung reservierte Operationscodes in Form von Operationscodeidentifikatoren zu verwenden, die aus verschiedenen Gründen hierfür geeignet sind, wobei der Ausdruck Operations codeidentifikator im folgenden eine Kombination aus einem Operationscode und einem optionalen Operanden, wie z.B. einem Adreßabschnitt, umfassen soll. Es könnte beispielsweise sein, daß ein bestimmter Befehl vom Compiler nicht unterstützt und verwendet wird, und dessen Operationscode somit anderweitig verwendbar ist, oder daß ein Operationscode in Verbindung mit einem bestimmten Operanden frei, d.h. undefiniert, ist.

Ferner wird darauf hingewiesen, daß sich die nachfolgende Beschreibung auf einen Speicher der Größe 1MB bezieht, der durch 20 Bits adressiert wird, obwohl auch andere Speichergrößen möglich sind, wie z.B. 14MB, und andere Anzahlen von Bits zur Adressierung, wie z.B. 24.

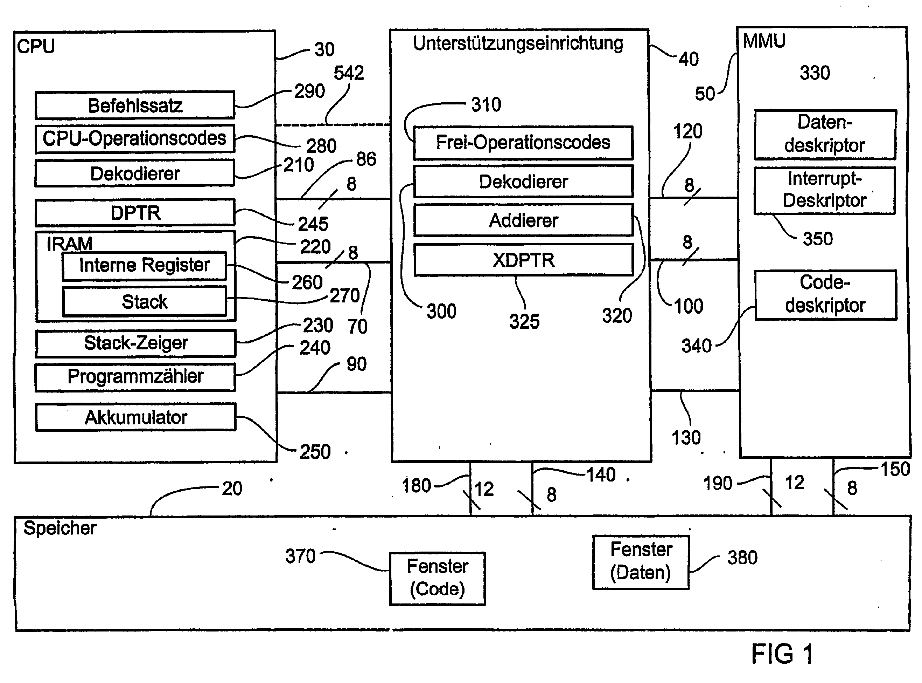

Fig. 1 zeigt einen Mikrocontroller, der allgemein mit 10 angezeigt ist, gemäß einem Ausführungsbeispiel der vorliegenden Erfindung sowie einen Speicher 20. Der Controller 10 umfaßt eine CPU 30, eine Unterstützungseinrichtung 40 sowie eine MMU bzw. Speicherverwaltungseinheit 50. Die CPU 30 basiert auf einer 8051-Controllerarchitektur und ist mit der Unterstützungseinrichtung 40 über eine bidirektionale 8-Bit-Datenleitung 60, eine 8-Bit-Adreßleitung 80 und eine Interruptleitung Int 90 verbunden. Die Unterstützungseinrichtung 40 ist mit der MMU 50 über eine bidirektionale 8-Bit-Datenleitung 100, eine 8-Bit-Adreßleitung 120 und eine Interruptleitung Int 130 verbunden. Sowohl die Unterstützungseinrichtung 40 als auch die MMU 50 sind mit dem Speicher 20 über eine 8-Bit-Datenleitung 140. bzw. 150 und eine 12-Bit-Adreßleitung 180 bzw. 190 verbunden.

Die CPU 30 umfaßt neben anderen, nicht gezeigten Komponenten, wie z.B. Addierern, einen Decodierer 210, einen internen RAM IRAM 220 sowie interne Register, zu denen ein Stackzeiger bzw. Stapelspeicherzeiger 230, ein Programmzähler 240, ein Datenzeigerregister DPTR 245 und ein Akkumulator 250 gehören. Weitere interne Register 260 sind in dem IRAM 220 vorgesehen, in dem ferner ein Stapelspeicher bzw. Stack 270 vorgesehen ist. Der Decodierer 210 decodiert Operationscodes oder Operationscodeidentifikatoren 280, die der CPU 30 auf der 8-Bit-Datenleitung 60 zugeführt werden, wobei jedem CPU-Operationscode oder Operationscodeidentifikator 280 ein Befehl aus einem Befehlssatz 290 der CPU 30 zugewiesen ist.

Die Unterstützungseinrichtung 40 umfaßt ebenfalls einen Decodierer 300, um Operationscodes oder Operationscodeidentifikatoren, die der Unterstützungseinrichtung 40 auf der 8-Bit-Datenleitung 140 von dem Speicher 20 zugeführt werden, zu decodieren. Die Unterstützungseinrichtung 40 spricht auf bestimmte Operationscodes 310 an, die nicht zu den CPU-Operationscodes 280 gehören bzw. für diese reservierte Operationscodes, sind, und denen folglich kein Befehl aus dem Befehlssatz 290 der CPU 30 zugewiesen ist. Diese Operationscodes werden im folgenden als Frei-Operationscodes 310 bezeichnet. Neben dem Decodierer 300 umfaßt die Unterstützungseinrichtung 40 ferner einen Addierer 320, um, wie es im folgenden erörtert werden wird, in der Unterstützungseinrichtung 40 gebildete 20-Bit-Adressen um einen Versatzwert, von beispielsweise 4 oder 16 Bits, zu modifizieren, sowie ein externes drei Byte großes Datenzeigerregister XDPTR 325.

Die MMU 50 umfaßt externe Register zum Speichern eines Datendeskriptors 330, eines Codedeskriptors 340 und optional eines Interruptdeskriptors 350.

Neben den genannten Komponenten umfassen die CPU 30, die Unterstützungseinrichtung 40 und die MMU 50 jeweils eine Steuerungseinrichtung, die jedoch nicht gezeigt sind und die aus der folgenden Beschreibung hervorgehenden Steuerungsaufgaben durchführen.

Es wird darauf hingewiesen, daß der Chipkartencontroller 10 ferner mit anderen Komponenten verbunden sein kann, die aus Übersichtlichkeitsgründen in Fig. 1 nicht gezeigt sind. Zu den angeschlossenen Komponenten können beispielsweise ein oder mehrere Kryptocoprozessoren zum Durchführen von Kryptographiealgorithmen, eine Sende/Empfangs schnittstelle, wie z.B. ein UART-Modul (universal asynchronous receiver-transmitter = universeller asynchroner Sende/Empfänger), ein Oszillator zum Erzeugen eines internen Takts, ein Interruptmodul zum hardwaremäßigen Generieren von Interruptsignalen, und ein Zufallszahlengenerator gehören, die durch einen Adreß-Daten-Bus mit dem Controller 10 und beispielsweise insbesondere mit der Unterstützungseinrichtung 40 verbunden sind.

Der Satz von Operationscodeidentifikatoren, den die CPU 30 umfaßt, setzt sich in dem vorliegenden Fall aus CPU-Operations code identifikatoren 280 und Frei-Operationscodeidentifikatoren 310 zusammen. Jeder Operationscodeidentifikatoren besteht allgemein aus einem Operationscode, der die Befehlsart und somit die Art und Weise der Verarbeitung für entweder die CPU 30 oder die Unterstützungseinrichtung 40 angibt, und gegebenenfalls aus weiteren Informationen, wie z.B. einem Adreßabschnitt zur Angabe einer Adresse, auf die sich der dem Operationscode zugeordnete Befehl bezieht, und/oder einem Operandenabschnitt zur Angabe eines Operanden, auf den sich der Befehl bezieht, wie z.B. eines Versatzwertes bezüglich der in dem Adreßabschnitt angegebenen Adresse, oder eines Summanden für einen Additionsbefehl. Die Gesamtanzahl von Operationscodes und folglich auch diejenige der Operationscodeidentifikatoren ist demnach durch die Anzahl von Codierungsmöglichkeiten für die Operationscodes beschränkt.

Entsprechend der begrenzten Anzahl von Adreßleitungen 80 und Datenleitungen 60 ermöglicht der Befehlssatz 290 der CPU 30 lediglich den Zugriff auf einen Speicherbereich mit begrenzter Speichergröße, d.h. 64 kByte bei einem byteweisen Zugriff. Auch bei Codezugriffen, bei denen die CPU 30 den nächsten zu verarbeitenden Operationscodeidentifikator mittels der in dem Programmzähler 240 gespeicherten 16-Bit-Codeadresse anfordert, ist die Adressierung auf einen 64kByte-Speicher begrenzt.

Bei dem vorliegenden Ausführungsbeispiel soll die Größe des Speichers 20 beispielsweise ein Megabyte betragen, wobei jedoch auch andere Speichergrößen möglich sind. Der Speicher 20 kann sich hierbei aus einer Vielzahl von Speichertypen zusammensetzen, wie z.B. einem RAM, einem ROM, einen NVM, wie z.B. einem EEPROM oder einem Flash-Speicher, oder dergleichen. Um die Adressierung des gesamten physikalischen Speichers 20 durch die CPU 30 bei Datenzugriffen mittels des Befehlssatzes 290 oder bei Codeanforderungen zu ermöglichen, sind in der MMU 50 der Datendeskriptor 330 und der Codedeskriptor 340 vorgesehen, die die Basisadressen bzw. die Lage für einen Codefensterbereich 370 und einen Datenfensterbereich 380 innerhalb des Speicher 20 festlegen, die jeweils 64kByte groß sind und die logischen Speicherbereiche festlegen, auf die sich die Datenzugriffe mittels des Befehlssatzes 290 bzw. die Codezugriffe der CPU 30 mittels des Programmzählers 240 beziehen.

Das Prinzip von Speicherzugriffen mit Hilfe der Deskriptoren 330 und 340 sei zunächst an dem Beispiel eines Lese-Befehls aus dem Befehlssatz 290 verdeutlicht, der vorgesehen ist, um in den Akkumulator 250 den Speicherinhalt einer Adresse zu schreiben, die in zwei Bytes der internen Register 260, wie z.B. in dem Datenzeigerregister DPTR, festgelegt wird, d.h., in der üblichen Notation, an dem Beispiel des Befehls "MOVX A, @DPTR". Es wird darauf hingewiesen, daß sich das nachfolgend beschriebene Ausführungsbeispiel wie auch die darauffolgenden auf Szenarien beziehen, bei denen der aktuell angeforderte Befehl unmittelbar auf einen Sprungbefehl folgt, und bei denen die CPU 30 zur Anforderung des aktuellen Befehls die in dem Programmzähler angeforderte Adresse ausgibt. Es ist möglich, daß in anderen Szenarien, bei denen der aktuell angeforderte Befehl nicht unmittelbar auf einen Sprungbefehl folgt, die Nachfolgeadresse an dem Speicher 20 in Form eines Autoinkrementers verwaltet wird, der automatisch eine 20-Bit-Codeadresse inkrementiert, und bei denen die CPU 30 lediglich ein Anforderungs- bzw. Aktivierungssignal an den Speicher 20 ausgibt.

Die CPU 30 fordert den Befehl durch Ausgabe der in dem Programmzähler 240 gespeicherten 16-Bit-Adresse auf den Adreßleitungen 80 und Datenleitungen 60 an. Die Unterstützungseinrichtung 40 leitet die Adreßsignale unverändert an die Adreßleitungen 120 und Datenleitungen 100 weiter. Die MMU 50 manipuliert die Adreßsignale, die die 16-Bit-Codeadresse anzeigen, basierend auf dem Codedeskriptor 340. Der Codedeskriptor 340 enthält beispielsweise höherwertige 4 Bits, die den 16 Bits der Codeadresse vorangestellt werden, wodurch sich 16 mögliche Speicherfensterpositionen ergeben, die im folgenden auch als Bänke bezeichnet werden. Oder aber der Codedeskriptor 340 enthält neben den höherwertigen 4 Bits, die den 16 Bits der Codeadresse vorangestellt werden, weitere Bits, um mehr als 16 mögliche Speicherfensterpositionen zu ermöglichen. Die MMU 50 gibt die sich ergebende 20-Bit-Codeadresse an den Speicher 20 aus, um den Maschinencode, d.h. in diesem Fall "MOVX A, @DPTR", anzufordern. Der Speicher 20 gibt aus dem Codespeicherfenster 370 den CPU-Operationscodeidentifikator 280 über die Datenleitungen 150, 100 und 60 an die DPU 30 aus, wobei die MMU 50 bzw. die Unterstützungseinrichtung 40 den CPU-Operationscodeidentifikator weiterleitet. Der Decodierer 210 decodiert den Operationscodeidentifikator 280 des Befehls MOVX A, @DPTR und gibt ansprechend auf den decodierten Befehl auf den Daten- und Adreßleitungen 60, 80 den Inhalt des Datenzeigers aus, um auf den entsprechenden Speicherinhalt in dem Datenspeicherfenster 380 zuzugreifen. Unter Weiterleitung durch die Unterstützungseinrichtung 40 gelangt die 16-Bit-Adresse des Datenzeigers zu der MMU 50, die aus derselben zusammen mit dem Datendeskriptor 330 die entsprechende 20-Bit-Adresse erzeugt und dieselbe auf den Adreß- und Datenleitungen 190, 150 an den Speicher 20 ausgibt. Der Speicher 20 gibt den entsprechenden Speicherinhalt über die Datenleitungen 150, 100 und 60 an die CPU 30 zurück, wo derselbe von der CPU 30 in den Akkumulator 250 geladen wird, wie es durch den Operationscode des Befehls MOVX A, @DPTR, festgelegt wird.

Um eine aufwendige softwaretechnische Umkonfigurierung bzw. Neueinstellung der Deskriptoren 330 und 340 vor einem Sprung Befehl oder einem Datenzugriff über die Grenzen des Codespeicherfensters 370 bzw. des Datenspeicherfensters 380 hinaus zu vermeiden, wie sie im vorhergehenden beschrieben wurde, ist die Unterstützungseinrichtung 40 mit der CPU 30 derart verbunden, daß sie den Datenverkehr von dem Speicher 20 zu der CPU 30 überwachen kann, um auf die Frei-Operationscodes 310 noch vor der CPU 30 ansprechen zu können, wenn dieselben aus dem Codespeicherfenster 370 von dem Speicher 20 angefordert werden. Wie es die nachfolgende Erörterung zeigen wird, kann durch diese Anordnung der Unterstützungseinrichtung 40 gewährleistet werden, daß die Bildung einer ausreichend großen Adresse, d.h. einer 20-Bit-Adresse, in der Unterstützungseinrichtung 40 geleistet werden kann, während die CPU 30 von der Unterstützungseinrichtung 40 geeignet "stimuliert" wird. Die Unterstützungseinrichtung 40 ist ferner derart mit der CPU 30 verbunden, daß sie den Datenverkehr von der CPU 30 zu dem Speicher 20 überwachen kann, um Adreßsignale, die die MMU 50 ausgibt, um eine Adressierung bezüglich des Speicher 20 vorzunehmen, zu manipulieren.

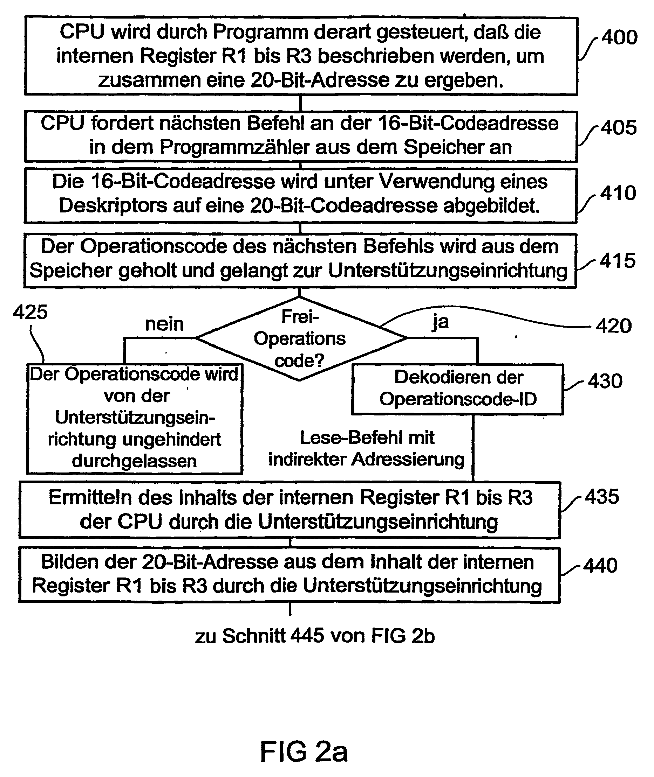

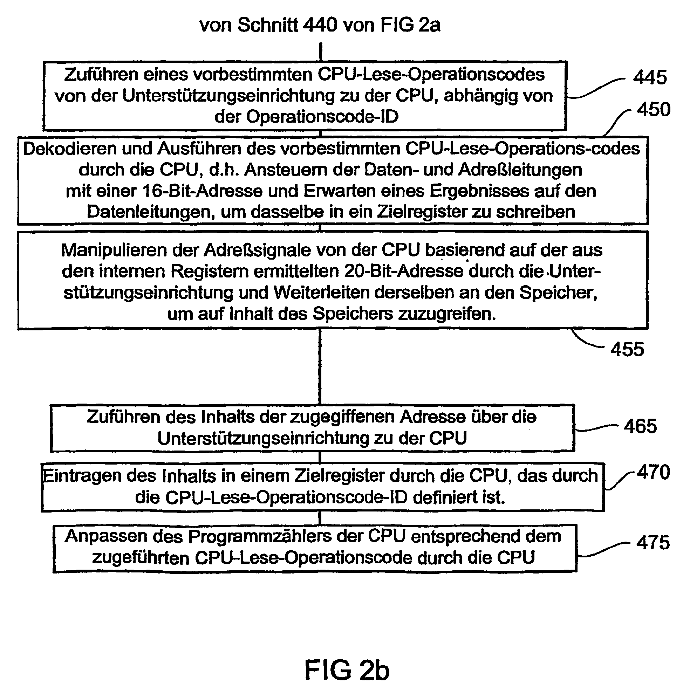

Bezug nehmend auf Fig. 2 wird im folgenden ein Ablauf von Schritten beschrieben, wie er bei dem Controller von Fig. 1 auftritt, wenn der nächste auszuführende, auf einen Sprung-Befehl folgende Operationscodeidentifikator, den die CPU anfordert, ein Frei-Operationscodeidentifikator ist, der einem Lese- bzw. Lade-Befehl entspricht, der sich auf ein internes Zielregister der CPU und eine mittels indirekter Adressierung in internen Registern der CPU 30 angegebene 20-Bit-Quelladresse bezieht.

In einem Schritt 400 muß die CPU 30 zunächst durch das laufende Programm derart gesteuert werden, daß die Register, auf die sich der neue Lese-Befehl hinsichtlich der Adreßbildung beziehen soll, geladen werden, um zusammen die 20-Bit-Adresse zu ergeben, auf die sich der neue Lese-Befehl bezieht. Bei dem in Fig. 2 gezeigten Ausführungsbeispiel sind dies die internen Register R1, R2 und R3 der CPU. Um diese internen Register zu füllen, könnte sich in dem Speicher 20 vor dem Frei-Operationscodeidentifikator beispielsweise folgende CPU-Operationscodeidentifikator-Folge befinden: "MOVX A, @Dptr", "MOV R2, A", "MOV R3, #0x13H", wobei Ri mit i=1...3 ein internes Register Ri, A den Akkumulator 250, Dptr den Datenzeiger 245 und #0×13H eine direkte Adresse in hexadezimaler Form anzeigt.

In einem Schritt 405 fordert die CPU 30 einen nächsten auszuführenden Befehl, der in diesem Fall auf einen Sprungbefehl unmittelbar folgt, durch Ausgabe der 16-Bit-Codeadresse, die in dem Programmzähler 240 gespeichert ist, auf den Adreß- und Datenleitungen 80, 60 an. Die 16-Bit-Codeadresse des Programmzählers 240 wird in einem Schritt 410, nachdem dieselbe die Unterstützungseinrichtung 40 unverändert passiert hat, durch die MMU 50 unter Verwendung des Codedeskriptors 340 auf eine 20-Bit-Codeadresse abgebildet bzw. manipuliert, die die MMU 50 an den Speicher 20 weiterleitet. Die in dem Programmzähler gespeicherte 16-Bit-Codeadresse entspricht beispielsweise einem niedrigwertigeren Teil der 20-Bit-Codeadresse, während der Codedeskriptor 340 einem höherwertigen 4-Bit-Teil der 20-Bit-Adresse entspricht, oder aber einen höherwertigen n-Bit Teil, wobei beispielsweise n gleich 12 ist. Die Abbildung bzw. Manipulation der 16-Bit-Codeadresse wird durch die MMU 50 mittels Ergänzen derselben durchgeführt. Alternativ kann der Codedeskriptor 340 einer 20-Bit-Basis- bzw. Startadresse einer Bank entsprechen, so daß die Abbildung mittels Addieren des Deskriptors 340 zu der 16-Bit-Codeadresse durchgeführt wird.

In einem Schritt 415 wird der Operationscodeidentifikator des angeforderten Befehls an der 20-Bit-Codeadresse, die sich aus dem Codedeskriptor 340 und dem 16-Bit-Programmzähler 240 ergeben hat, aus dem Speicher 20 geholt und gelangt über die Adreß- und Datenleitungen 150, 190, und 120 von der MMU 50 ungehindert zur Unterstützungseinrichtung 40.

In einem Schritt 420 überprüft der Decodierer 300 der Unterstützungseinrichtung 40, ob der von dem Speicher 20 empfangene Operationscodeidentifikator einen Frei-Operations code aufweist, wie es durch den Operationscode angegeben wird. Falls sich in dem Schritt 420 ergibt, daß der von dem Speicher geholte Operationscode kein Frei-Operationscode ist, wird derselbe in einem Schritt 425 in der Unterstützungseinrichtung 40 ungehindert durchgelassen und über die Adreß- und Datenleitungen 60 und 80 an die CPU 30 weitergeleitet, woraufhin der CPU-Operationscodeidentifikator durch die CPU 30 auf herkömmliche Weise dekodiert und ausgeführt wird. Ist der Operationscode von dem Speicher 20 jedoch ein Frei-Operationscode, so wird in einem Schritt 430 der Operationscode decodiert, um zu ermitteln, um welchen der Frei-Operationscodes 310 es sich bei dem Operationscode handelt.

Wie es im vorhergehenden erwähnt wurde, wird in dem Fall von Fig. 2 angenommen, daß es sich bei dem Operationscode um einen Frei-Operationscode handelt, der einem Lese-Befehl mit indirekter Adressierung entspricht. In einem Schritt 435 ermittelt die Unterstützungseinrichtung 40 den Inhalt der internen Register R1 bis R3 der CPU 30. Die Ermittlung kann auf verschiedene Weisen realisiert sein. Gemäß einem Ausführungsbeispiel ist die Unterstützungseinrichtung 40 mit der CPU 30 ferner über eine Leitung 542 verbunden, die es der Unterstützungseinrichtung 40 ermöglicht, den Inhalt der Register R1 bis R3 abzufragen. Dies kann beispielsweise im Rahmen eines Trace-Mechanismus ausgeführt sein, so daß die Unterstützungseinrichtung 40 über die Leitung 542 mit einem internen Bus der CPU 30 verbunden ist, an dem das IRAM 220 angeschlossen ist, und über den die Register R1 bis R3 in dem IRAM 220 geladen werden. Bei einem weiteren Ausführungsbeispiel verwendet die Unterstützungseinrichtung 40 zum Ermitteln des Inhalts der Register R1 bis R3 CPU-Operationscodeidentifikatoren, die sie der CPU zuführt, um die CPU derart zu stimulieren, daß dieselbe den Inhalt der Register R1 bis R3 auf der Datenleitung 60 ausgibt, wobei geeignete Vorkehrungen getroffen werden, um den Programmzähler 240 geeignet zu steuern.

In einem Schritt 440 bildet die Unterstützungseinrichtung 40 aus dem ermittelten Inhalt die 20-Bit-Adresse, auf die sich der Frei-Operationscodeidentifikator bzw. der Lese-Befehl bezieht.

In einem Schritt 445 wird der CPU 30 von der Unterstützungseinrichtung 40 ein vorbestimmter CPU-Lese-Operationscodeidentifikator abhängig von dem Frei-Operationscodeidentifikator bzw. dem Frei-Operationscode zugeführt. In dem vorliegenden Fall, da der Frei-Operationscode beispielsweise einem Lese-Befehl entspricht, der den Speicherinhalt an der aus dem Registerinhalt ermittelten 20-Bit-Adresse in das Akkumulatorregister 250 lädt, führt die Unterstützungseinrichtung 40 der CPU einen CPU-Operationscode zu, der einem Befehl "MOVX A, @R1" entspricht, d.h. einem Lesebefehl bezüglich des Speichers 20, der vorgesehen ist, um den Speicherinhalt an der durch die verwendeten Register angegebenen Adresse in das Register A zu laden. Der vorbestimmte Operationscodeidentifikator würde in diesem Fall lediglich aus dem Operationscode bestehen.

In einem Schritt 450 empfängt die CPU 30 den von der Unterstützungseinrichtung 40 zugeführten CPU-Operationscodeidentifikator und decodiert denselben. Bei der Ausführung des zugeführten CPU-Operationscodeidentifikatoren für den Befehl MOVX steuert die CPU 30 die Adreß- und Datenleitungen 60 und 80 mit der im Rahmen einer direkten Adressierung in dem CPU-Operationscodeidentifikator enthaltenen oder im Rahmen einer indirekten Adressierung aus einem internen Register ermittelten 16-Bit-Adresse an und wartet von da an darauf, daß auf den Datenleitungen 60 ein Ergebnis geliefert wird, um dasselbe in das Zielregister, d.h. den Akkumulator 250, zu schreiben.

In einem Schritt 455 manipuliert die Unterstützungseinrichtung 40 die Adreßsignale von der CPU 30 basierend auf der aus den Registern R2 bis R3 ermittelten 20-Bit-Adresse und leitet dieselben an den Speicher 20 weiter, um auf den Inhalt des Speichers 20 zuzugreifen. Die Manipulation der Adreßsignale bzw. der 16-Bit-Adresse von der CPU 30 kann beispielsweise das Ersetzen derselben durch die 20-Bit-Adresse selbst, das Anfügen bzw. Ergänzen des fehlenden Abschnitts, wie z.B. der vier höchstwertigen Bits, der 20-Bit-Adresse zu den 16-Bits von der CPU 30 und gegebenenfalls, falls dies nicht schon in Schritt 430 geschehen ist, zusätzlich das Addieren von ungenutzten Bits des Frei-Operationscodeidentifikators als Versatzwert zu dem Ergebnis aufweisen.

In einem Schritt 465 wird daraufhin der Speicherinhalt der zugegriffenen 20-Bit-Adresse über die Daten- und Adreßleitungen 60, 80, 140 und 180 sowie die Unterstützungseinrichtung 40 zu der CPU 30 geliefert. In einem Schritt 470 lädt die CPU 30, die aufgrund des in dem Schritt 450 zugeführten vorbestimmten CPU-Lese-Operationscodeidentifikatoren entsprechend stimuliert bzw. in einen vorbestimmten Zustand versetzt worden ist, den zugeführten Speicherinhalt in das Zielregister, d.h. den Akkumulator 250, wie es durch den CPU-Lese-Operationscode definiert ist. Abschließend paßt die CPU 30 in einem Schritt 475 den Programmzähler 240 entsprechend dem zugeführten vorbestimmten CPU-Lese-Operationscodeidentifikator an, wobei dieser Schritt ferner früher erfolgen kann.

Nach dem Schritt 475 zeigt der Programmzähler 240 folglich innerhalb des Codespeicherfensters 370 auf den nächsten zu verarbeitenden Befehl bzw. Operationscodeidentifikator gemäß der normalen Befehlssequenz, und in dem Akkumulator 250 befindet sich der Speicherinhalt der 20-Bit-Adresse, auf den sich der Frei-Operationscodeidentifikator bezog. Unabhängig von der Lage des aktuell eingestellten Datenspeicherfensters 380 ist keine softwaremäßige Umkonfigurierung der MMU 50 bzw. des Datendeskriptors 330 erforderlich. Bei einer Realisierung des in Fig. 1 gezeigten Controllers, benötigt der Speicherzugriff gemäß Fig. 2 lediglich zwei Taktzyklen länger als bei Speicherzugriffen mittels Lesebefehlen des Befehlssatzes 290 innerhalb des aktuell eingestellten Speicherfensters 380.

Die Adressierung bei der Ausführung des Frei-Operationscodeidentifikators bei diesem Ausführungsbeispiel wird mittels indirekter Adressierung unter Verwendung der CPU-eigenen Register durchgeführt. Trotzdem ist bei dem Entwurf des Controllers 10 basierend auf einem existierenden CPU-Layout kaum ein Eingriff in das CPU-Layout erforderlich, so daß die Implementierung eines solchen Controllers unaufwendig ist.

Bezugnehmend auf Fig. 2 wird noch darauf hingewiesen, daß es möglich ist, zur Bildung der 20-Bit-Adresse ein extern angeordnetes Register zu verwenden, wie z.B. ein XDPTR-Register 325. In diesem Fall würde der Frei-Operationscode die Angabe umfassen, daß das XDPTR-Register für die Adressierung: zu verwenden ist. Dieses könnte in dem Schritt 400 durch andere Frei-Operationscodeidentifikatoren mit Werten aus internen Registern der CPU geladen werden, wie z.B. mit dem Inhalt der Register R1, R2, R3. In letzterem Fall kämen die besagten Frei-Operations code identifikatoren einfach zu den Befehlen zum Laden der Register R1-R3 von Schritt 400 hinzu. Bei Verwendung solcher das externe Register XDPTR 325 verwendenden Frei-Operationscodes müßte die CPU 30 im Layout nicht verändert werden, um den Inhalt der Register R1-R3 zu ermitteln. Dies hat den Vorteil, daß die CPU-Register R0-R7 zwischenzeitlich für andere Zwecke weiterverwendet werden können.

Beispiele für Befehle zum Laden, Auslesen oder anderweitigem Verwenden des externen Registers XDPTR 325 sind im folgenden aufgelistet, wobei die übliche Notation verwendet wurde:

| | | |
|---|---|---|
| Xmov XDPTR, (R3&R2&R1) | (2B) | |
| Xmov XDPTR,(R7&R6&R5) | (2B) | |
| Xpush | (2B) | |
| Xpop | (2B) | |
| Xmov XDPTR, @DPTR | (2B) | MSB (höchstwertige Bits), |
| | | LSB- (niedrigstwertige |
| | | Bits) Position beachten |
| Xmov @DPTR, XDPTR | (2B) | MSB (höchstwertige Bits), |
| | | LSB- (niedrigstwertige Bits) Position beachten |
| Xmov XDPTR, @Ri | (2B) | mit i=0... 7 |
| Xmov @Ri, XDPTR | (2B) | mit i=0...7 |
| Xmov XDPTR,dadr | (2B) | |
| Xmov dadr, XDPTR | | (2B) |
| Xadd XDPTR, #const16 | (4B) | |
| Xadd XDPTR, (Rn&Rn-1) | (2B) | mit n=1...7 |
| Xinc | | |

wobei Xmov einen Register-Lade-Befehl, Xadd einen Addier-Befehl, Xpush einen Stack-Befüllung-Befehl, Xpop einen Stack-Entnahme-Befehl und Xinc einen Inkrementier-Befehl anzeigt. DPTR, Ri mit i = 1..7, dadr und X gehören zu den internen Registern der CPU 30. const16 zeigt einen 16-Bit-Operanden an. "&"-Zeichen zeigen eine Verkettung der beiden Ausdrücke links und rechts an. In Klammern auf der rechten Seite sind die für den jeweiligen Operationscodeidentifikator benötigten Bytes angegeben.

Es wird darauf hingewiesen, daß die möglichen Lese-Befehle, die auf Frei-Operationscodeidentifikatoren basieren, auf alle möglichen Zielregister oder einen sonstigen adressierbaren Speicher in der CPU 30 bezogen sein können. Ferner können mögliche, auf Frei-Operationscodeidentifikatoren basierende Lese-Befehle mit einer indirekten Adressierung jegliche Register oder jeglichen Speicherplatz innerhalb der CPU 30 bzw. jegliche Kombination derselben zur Bildung der 20-Bit-Adresse, auf die sich der Lese-Befehl bezieht, verwenden. Ferner sind auch Kombinationen einer direkten und einer indirekten Adressierung möglich, d.h. eine Kombination des Inhalts eines oder mehrerer interner Register der CPU 30 und eines oder mehrere Bytes (oder Bits) innerhalb eines Adreßabschnitts des Frei-Operationscodeidentifikators.

Es wird ferner darauf hingewiesen, daß die vorhergehende Beschreibung ohne weiteres auf Frei-Operationscodeidentifikatoren anwendbar ist, die Schreibbefehlen bezüglich einer 20-Bit-Adresse entsprechen, wobei lediglich die Übertragungsrichtung des zugegriffenen Speicherinhalts auf von der CPU 30 zu dem Speicher 20 zu ändern ist.

Im folgenden werden in Tabelle 1 unter Verwendung der üblichen Notation Beispiele für mögliche Lese-Befehle XMOV angegeben, die von der Unterstützungseinrichtung 40 ansprechend auf entsprechende Frei-Operationscodeidentifikatoren 310 gemäß dem Ausführungsbeispiel von Fig. 2 verarbeitet werden können. XMOV soll einen Operätionscode anzeigen, der einen durch spezielle Register angezeiaten Speicherinhal,t in beispielsweise das Akkumulatorregister einträgt, wie es genauer im folgenden in Bezug auf generische Zeiger näher erläütert wird. Hierbei soll im folgenden Ri mit i=0...4 ein internes Register Ri, XDPTR der externe Datenzeiger 325 und A der Akkumulator 250 sein, und "off8" einen Versatzwert von 8 Bits bezeichnen. "&"' zeigt eine Verkettung der Ausdrücke links und rechts an.

**Tabelle 1**

| Lesebefehle | | |
|---|---|---|
| Xmov A, @XDPTR + off8 | (3B) | |
| Xmov A, @XDPTR+RX | (3B) | mit Rx= {R0,R4} |
| Xmov A,@(R3&R2&R1)+off8 | (3B) | |
| Xmov A, @(R3&R2&R1)+Rx | (3B) | mit Rx={R0,R4} |

Es wird ferner darauf hingewiesen, daß es vorgesehen sein kann, daß die Unterstützungseinrichtung 40 einen Frei-Operationscode unterstützt bzw. auf denselben anspricht, der zur Handhabung von generischen Zeigern vorgesehen ist. Ein generischer Zeiger besteht aus einer Adresse und einer Angabe der Adressierungsart. Die Adressierungsartangabe gibt im wesentlichen an, unter Verwendung welchen Befehls mit der Adresse des generischen Zeigers auf den Speicher zugegriffen werden soll. Die 8051-Architektur sieht vier Adressierungsarten vor, zu denen die Zugriffsart unter Verwendung von neuen Frei-Operationscodeidentifikatoren hinzukommt. Die vier 8051-Adressierungsarten umfassen den
- IData-Zugriff, bei dem der Zugriff (Lesen oder Schreiben) bezüglich des IRAMs 220 der CPU 30 stattfindet (MOV), der 256 Bytes groß ist, und deshalb mit lediglich einem Byte adressiert werden kann,
- einen XData-Zugriff, bei dem der Zugriff auf das aktuell eingestellte Datenspeicherfenster 380 des externen Speichers (XRAM) stattfindet (MOVX) und zur Adressierung zwei Bytes angegeben werden,
- einen PData-Zugriff, bei dem der Zugriff ebenfalls auf das aktuell eingestellte Datenspeicherfenster 380 des externen Speichers (XRAM) stattfindet und zur Adressierung ein Register AdrXh mit dem vorbestimmten Register R1 kombiniert wird, um eine 16-Bit-Adresse zu ergeben, und
- einen Code-Zugriff, bei dem auf das aktuell eingestellte Codespeicherfenster 370 zugegriffen wird (MOVC) und ebenfalls zwei Bytes zur Adressierung angegeben werden. Bei Ausgabe der jeweiligen 16-Bit-Adresse durch die CPU 30 auf den Daten- und Adreßleitungen 60 und 80 könnte ein Code-Zugriff von beispielsweise einem Xdata-Zugriff nach außen hin durch Anzeigen eines verschiedenen Busstatus auf einer zusätzlichen Leitung (nicht gezeigt) unterschieden werden.

Bei einem folgenden Ausführungsbeispiel werden die Informationen des generischen Zeigers, d.h. die Adreßangabe und die Adressierungsartangabe, ähnlich zu dem Ausführungsbeispiel von Fig. 2 in Hinblick auf die Angabe der 20-Bit-Adresse, innerhalb der Maschinencodesequenz vorab in den internen Registern R1 bis R3 abgelegt, wonach ein darauffolgender Frei-Operationscodeidentifikator, der einem Befehl zur Behandlung von generischen Zeigern entspricht, vorgesehen wird, um die Unterstützungseinrichtung 40 zu aktivieren, die daraufhin der CPU 30 abhängig von der Adressierungsartangabe einen vorbestimmten CPU-Operationscodeidentifikator zuführt, der einen abhängig von der Adreßangabe des generischen Zeigers eingestellten Adreßbereich aufweist. Der generische Zeiger, auf den sich der Befehl zur Handhabung von generischen Zeigern bezieht, kann jedoch auch in einem Abschnitt des Frei-Operationscodeidentifikators des Befehls zur Handhabung von generischen Zeigern selbst enthalten sein. Wie auch schon bei der Beschreibung von Fig. 2 wird darauf hingewiesen, daß nicht nur die Verwendung von internen Registern zur indirekten Adressierung möglich ist, sondern daß ferner externe Register, wie z.B. das externe XDPTR-Register 325, verwendet werden können, wobei die folgende Beschreibung ohne weiteres auf diesen Fall übertragbar ist.

In der folgenden Tabelle 2 sind am Beispiel von Lesevorgängen für jede Zugriffsart, die in der ersten Spalte angegeben sind, in der zweiten Spalte ein eigentlich bezweckter Befehl in der üblichen Notation, in der dritten Spalte der Inhalt des Registers R3, in der vierten Spalte der Inhalt des Registers R2, in der fünften Spalte der Inhalt des Registers R1 jeweils zum Zeitpunkt, da der Codezugriff auf den Frei-Operationscodeidentifikator zur Behandlung von generischen Zeigern stattfindet, und in der sechsten Spalte der der CPU 30 von der Unterstützungseinrichtung 40 zugeführten CPU-Operationscodeidentifikator bzw. der entsprechende Befehl in der üblichen Notation aufgelistet. Hierbei soll das @-Zeichen den Speicherinhalt bedeuten, auf den der folgende Ausdruck als Adresse zeigt, A den Akkumulator 250, AdrXh ein internes Register der CPU 30, MOVX einen Lese/Schreibbefehl bezüglich des Speichers 20, MOV einen Lese/Schreibbefehl bezüglich des internen Speichers IRAM 220 der CPU 30 und MOVC einen Code-zugriff bezüglich des Speichers 20 anzeigen.

**Tabelle 2**

| Adressierungsart | Bezweckte Wirkung | R3 8 Bit | R2 8 Bit | R1 8 Bit | der der CPU zugeführte Operationscodeidentifikator |
|---|---|---|---|---|---|
| Idata-Zugriff | MOV A,@R1 | 00h | - * | Adreßangabe | MOV A,@R1 |
| Xdata-Zugriff | MOVX A,@(R2,R1) | 01h | Adreßangabe | | MOVX A, @R1 |
| Pdata-Zugriff | MOVX A.@(AdrXh,R1) | FEh | AdrXh | Adreßangabe | MOVX A, @R1 |
| Code-Zugriff | MOVC A,@A+(R2,R1) | FFh | Adreßangabe | | MOVC A, @A+DPTR |
| 20-Bit-Datenzugriff | MOVX A, @ (R3, R2, R1) | 10h - EFh | Adreßangabe | | MOVX A, @R1 |

| | | | | | |
|---|---|---|---|---|---|
| * beliebiger Wert | | | | | |

In dem Fall, daß die Unterstützungseinrichtung 40 den Frei-Operationscodeidentifikator zur Behandlung eines generischen Zeigers empfängt, decodiert die Unterstützungseinrichtung 40 folglich den Inhalt des Registers R3, wo die Adressierungsartangabe gespeichert ist, um abhängig von der Adressierungsartangabe in dem Fall, daß es sich bei der Adressierungsart nicht um einen 20-Bit-Datenzugriff handelt, der zentralen Verarbeitungseinheit 30 einen CPU-Operationscodeidentifikator zuzuführen, der einem Schreib/Lesebefehl bezüglich des der Adressierungsart zugeordneten Speichers entspricht, und in dem Fall, daß die Adressierungsartangabe einem 20-Bit-Datenzugriff entspricht, der zentralen Verarbeitungseinheit 30 einen vorbestimmten CPU-Operationscodeidentifikator zuzuführen, der einem Schreib/Lesebefehl bezüglich des Speichers 20 entspricht, und daraufhin gegebenenfalls vorbestimmte Handlungen vorzunehmen, um Adreßsignale der zentralen Verarbeitungseinheit 30 geeignet zu manipulieren.

In dem Fall eines IData-Zugriffs führt die Unterstützungseinrichtung 40 der CPU 30 anstatt des Frei-Operationscodeidentifikators zur Handhabung von generischen Zeigern, der im folgenden in Hinblick auf die übliche Notation als XMOV-Operationscode bezeichnet wird, den Operationscodeidentifikator für "MOV A, @R1" zu.

In dem Fall eines XData-Zugriffs wird der CPU 30 anstatt des XMOV-Operationscodes der CPU-Operationscode für "MOVX A, @R1" zugeführt, wobei die Unterstützungseinrichtung 40 die von der CPU 30 ansprechend auf den CPU-Operationscode ausgegebene 16-Bit-Adresse während der Adreßübermittlung in Hinblick auf das höherwertige Byte gemäß dem Inhalt des internen Registers R2 manipuliert und die manipulierte Adresse an die MMU 50 weiterleitet.

In dem Fall des Code-Zugriffs wird der CPU 30 anstatt des XMOV-Operationscode der CPU-Operationscode für "MOVC A, @A+DPTR" zugeführt, wobei die Unterstützungseinrichtung 40 die von der CPU 30 ansprechend auf den zugeführten CPU-Operationscode ausgegebene 16-Bit-Adresse während der Adreßübermittlung gemäß dem Inhalt der internen Register R2 und R1 manipuliert und in geänderter Form an die MMU 50 ausgibt.

In dem Fall eines PData-Zugriffs wird der CPU 30 anstatt des XMOV-Operationscodes der CPU-Operationscode für "MOVX A, @R1" zugeführt.

In dem Fall eines 20-Bit-Datenzugriffs wird der CPU 30 anstatt des XMOV-Operationscodes der CPU-Operationscode für "MOVX A, @R1" zugeführt, wobei die Unterstützungseinrichtung 40, wie es im Vorhergehenden beschrieben wurde, die von der CPU 30 ausgegebene Adresse während der Adreßübermittlung mit dem Inhalt der internen Register R2 bis R3 manipuliert und in geänderter Form an den Speicher 20 ausgibt.

Der Vorteil des Vorsehens eines Frei-Operationscodes zur Behandlung von generischen Zeigern besteht darin, daß die Handhabung von generischen Zeigern hardwäremäßig erfolgt, während hierzu herkömmlicher Weise eine softwaremäßige Decodierung erforderlich war. Bei einer speziellen Realisierung des Controllers von Fig. 1 mit dem Vorsehen eines speziellen Frei-Operationscodes zur Behandlung von generischen Zeigern wurde eine Zeitersparnis von etwa 20 Taktzyklen erzielt.

Es wird darauf hingewiesen, daß, wie es in Tabelle 2 gezeigt ist, zur Codierung der Angabe, daß es sich um einen 20-Bit-Datenzugriff handelt, mehrere Codierungen möglich sind, d.h. 1h-Eh. Diese 14 Kombinationen von vier Bits könnten verwendet werden, um zusammen mit den 20 weiteren Bits eine Adressierung eines 14 MB großen Speichers zu ermöglichen anstatt des in dem vorliegenden Ausführungsbeispiel 1 MB großen Speichers, indem 24 Bits zur Adressierung verwendet werden, und indem anstatt 12-Bit-Leitungen 180, 190 16-Bit-leitungen verwendet werden.

Nachdem im Vorhergehenden der Ablauf von Schritten für den Controller von Fig. 1 in Bezug auf Frei-Operationscodes beschrieben worden ist, die sich auf Lese/Schreib-Befehle bezogen, wird im folgenden die Funktionsweise des Controllers 10 in dem Zusammenhang mit Frei-Operationscodes beschrieben, die Sprungbefehlen, wie z.B. einem Sprungbefehl mit Rückkehrabsicht oder ohne Rückkehrabsicht, entsprechen.

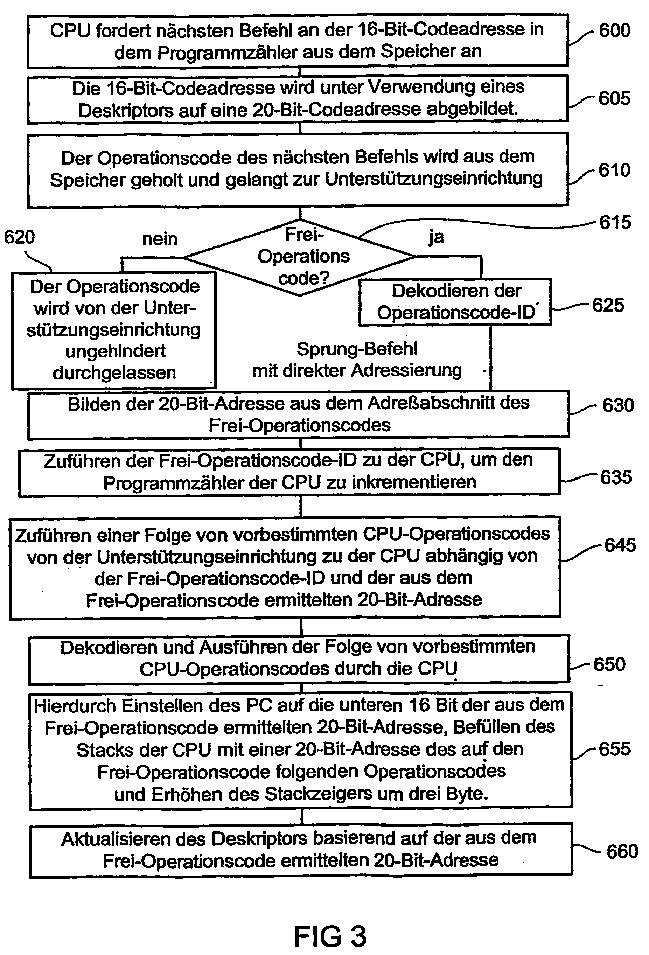

Fig. 3 zeigt den Ablauf von Schritten, wie er bei dem Controller von Fig. 1 stattfindet, bezüglich eines Ausführungsbeispiels, bei dem die CPU den nächsten Operationscodeidentifikator zur Verarbeitung anfordert und derselbe ein Frei-Operationscodeidentifikator ist, der sich auf einen Sprungbefehl mit direkter Adressierung und mit Rückkehrabsicht bezieht. Wie bei den vorhergehenden Ausführungsbeispielen erfolgt die Anforderung des nächsten Operationscodeidentifikators unter Angabe der Codeadresse in dem Programmzähler. Anders ausgerückt wird angenommen, das unmittelbar vorher ein vorhergehender Sprungbefehl verarbeitet worden ist. Andernfalls erfolgte die Anforderung lediglich durch Ausgabe eines Anforderungssignals von der CPU 30 und unter Verwendung einer von dem Speicher 20 geführten 20-Bit-Codeadresse.

In einem Schritt 600 fordert die CPU 30 einen nächsten auszuführenden Befehl, der in diesem Fall auf einen Sprungbefehl unmittelbar folgt, durch Ausgabe der 16-Bit-Codeadresse, die in dem Programmzähler 240 gespeichert ist, auf den Adreß- und Datenleitungen 80, 60 an. Die 16-Bit-Codeadresse des Programmzählers 240 wird in einem Schritt 605, nachdem dieselbe die Unterstützungseinrichtung 40 unverändert passiert hat, durch die MMU 50 unter Verwendung des Codedeskriptors 340 auf eine 20-Bit-Codeadresse abgebildet bzw. manipuliert, die die MMU 50 an den Speicher 20 weiterleitet. Die in dem Programmzähler gespeicherte 16-Bit-Codeadresse entspricht beispielsweise einem niedrigwertigeren Teil der 20-Bit-Codeadresse, während der Codedeskriptor 340 einem höherwertigen 4-Bit-Teil der 20-Bit-Adresse entspricht, oder aber einen höherwertigen n-Bit Teil, wobei beispielsweise n gleich 12 ist. Die Abbildung bzw. Manipulation der 16-Bit-Codeadresse wird durch die MMU 50 mittels Ergänzen derselben durchgeführt. Alternativ kann der Codedeskriptor 340 einer 20-Bit-Basis- bzw. Startadresse einer Bank entsprechen, so daß die Abbildung mittels Addieren des Deskriptors 340 zu der 16-Bit-Codeadresse durchgeführt wird.

In einem Schritt 610 wird der Operationscodeidentifikator des angeforderten Befehls an der 20-Bit-Codeadresse, die sich aus dem Codedeskriptor 340 und dem 16-Bit-Programmzähler 240 ergeben hat, aus dem Speicher 20 geholt und gelangt über die Adreß- und Datenleitungen 150, 190, und 120 von der MMU 50 ungehindert zur Unterstützungseinrichtung 40.

In einem Schritt 615 überprüft der Decodierer 300 der Unterstützungseinrichtung 40, ob der von dem Speicher 20 empfangene Operationscodeidentifikator ein Frei-Operationscodeidentifikator ist, wie es durch die Operationscode angegeben wird. Falls sich in dem Schritt 615 ergibt, daß der von dem Speicher geholte Operationscodeidentifikator kein Frei-Operationscodeidentifikator ist, wird derselbe in einem Schritt 620 in der Unterstützungseinrichtung 40 ungehindert durchgelassen und über die Adreß- und Datenleitungen 60 und 80 an die CPU 30 weitergeleitet, woraufhin der CPU-Operationscode durch die CPU 30 auf herkömmliche Weise dekodiert und ausgeführt wird. Ist der Operationscodeidentifikator von dem Speicher 20 jedoch ein Frei-Operationscodeidentifikator, so wird in einem Schritt 625 die Operationscode decodiert, um zu ermitteln, um welchen der Frei-Operationscodes 310 es sich bei dem Operationscode handelt.

Bei dem Ausführungsbeispiel von Fig. 3 wird, wie es im Vorhergehenden erwähnt wurde, angenommen, daß der angeforderte Operationscodeidentifikator ein Frei-Operationscodeidentifikator ist, der sich auf einen Sprungbefehl mit direkter Adressierung und mit Rückkehrabsicht bezieht. In einem Schritt 630 bildet die Unterstützungseinrichtung 40 aus dem in dem Frei-Operationscodeidentifikator enthaltenen Adreßabschnitt die 20-Bit-Adresse, auf die sich der neue Sprung-Befehl bezieht, und die die Zieladresse des dem Frei-Operationscodeidentifikator entsprechenden Sprungbefehls ist. Dieser Schritt kann beispielsweise ferner das Bestimmen eines Versatzwertes direkt aus einem weiteren Abschnitt des Frei-Operationscodeidentifikators oder auch indirekt aus einem zu der CPU 30 internen oder externen Register und das Addieren desselben zu der in dem Adreßabschnitt angegebenen 20-Bit-Adresse durch den Addierer 320 umfassen. Der Frei-Operationscodeidentifikator umfaßt beispielsweise ein Byte für die Operationscode und drei weitere Bytes, von denen 20 Bits die 20-Bit-Adresse und die restlichen 4 Bits den Versatzwert angegeben.

In einem Schritt 635 wird der CPU 30 von der Unterstützungseinrichtung 40 der Frei-Operationscode zugeführt, obwohl der Frei-Operationscode nicht zu den CPU-Operationscodes gehört, die den Befehlssatz 290 festlegen. Der Schritt 635 ist vorgesehen, um den Programmzähler 240 in der CPU zu inkrementieren, um den Umstand Rechnung zu tragen, daß der Frei-Operationscodeidentifikator, der dem Sprung-Befehl mit direkter 20-Bit-Adressierung entspricht, 4 Bytes benötigt, während ein der CPU 30 anschließend zugeführter CPU-Operationscodeidentifikator eines CALL-Befehls lediglich 3 Byte lang ist. Der Schritt 635 kann jedoch ferner entfallen, wenn ein Sprung-Befehl ohne Rückkehrabsicht erfolgen soll, da dann der Programmzählerstand nicht als Rücksprungadresse benötigt wird. Der Schritt 635 kann auch fehlen, wenn die Stack 270 der CPU 30 auf andere Weise beschrieben wird, wie es im folgenden in Bezug auf den folgenden Schritt beschrieben wird.

In einem Schritt 645 wird daraufhin der CPU 30 von der Unterstützungseinrichtung 40 eine Folge von vorbestimmten CPU-Operationscodeidentifikatoren zugeführt, die zumindest einen Sprungbefehl aus dem Befehlssatz 290 der CPU 30 umfassen, der sich auf eine 16-Bitadresse bezieht, die schließlich zusammen mit dem Codedeskriptor 340 die 20-Bit-Sprungadresse ergeben soll, um beispielsweise für nachfolgende Befehlsanforderungen gemäß den Schritten 600-610 geeignet eingestellt zu sein. Die Folge ist abhängig von dem Frei-Operationscode und der aus den internen Registern ermittelten 20-Bit-Adresse.

In einem Schritt 650 decodiert die CPU 30 die Folge von vorbestimmten CPO-Operationscodeidentifikatoren und führt die entsprechenden Befehle aus. Wie es in dem Schritt 655 zusammengefaßt ist, ist die Folge von CPU-Operationscodeidentifikatoren derart vorgesehen, daß die CPU 30 bei Ausführung der Folge von CPU-Operationscodeidentifikatoren den Programmzähler PC auf die unteren, d.h. niedrigwertigeren, 16 Bits der aus den internen Registern ermittelten 20-Bit-Adresse einstellt, den Stack 270 mit einer 20-Bit-Adresse befüllt, die auf den dem Frei-Operationscodeidentifikator folgenden Operationscodeidentifikator zeigt, und den Stack-Zeiger 230 um drei Byte erhöht. Die Unterstützungseinrichtung 40 führt der CPU 30 in dem Schritt 635 beispielsweise einen Sprungbefehl mit Rückkehrabsicht zu, der sich auf eine 16-Bit-Zieladresse bezieht, die einem Versatzwert der aus dem Adreßabschnitt ermittelten 20-bit-Adresse bezüglich der 64kByte-Bank entspricht, die diese 20-Bit-Adresse enthält, um den Programmzähler 240 auf die 16-Bit-Zieladresse einzustellen, und daraufhin in Schritt 645 einen Stack-Befüllungs-Befehl (in der üblichen Notation als PUSH-Befehle bezeichnet), der den fehlenden Bits der 20-Bit-Adresse entspricht, um die 20-Bit-Adresse des auf den Frei-Operationscodeidentifikator folgenden Operationscodeidentifikator in den Stack 270 einzutragen. Oder die Unterstützungseinrichtung 40 führt der CPU 30 in dem Schritt 635 beispielsweise einen Sprungbefehl ohne Rückkehrabsicht zu und daraufhin in Schritt 645 drei Stack-Befüllungs-Befehle (in der üblichen Notation als PUSH-Befehle bezeichnet), die jeweils einem Teil der 20-Bit-Adresse entsprechen, um die 20-Bit-Adresse des auf den Frei-Operationscodeidentifikator folgenden Operationscodeidentifikators in den Stack 270 einzutragen.

In einem Schritt 660 nimmt die Unterstützungseinrichtung 40 eine Aktualisierung bzw. Anpassung des Codedeskriptors 340 basierend auf der aus dem Adreßabschnitt ermittelten 20-Bit-Adresse vor, so daß anschließend der Codedeskriptor 340 derart eingestellt ist, daß die 20-Bit-Adresse in dem Codespeicherfenster 370 enthalten ist, und der Programmzähler 240 innerhalb des Codespeicherfensters 370 auf die gewünschte Position zeigt. Auf diese Weise verwaltet die Unterstützungseinrichtung 40 den Codedeskriptor 340.

Entsprechend den Freidatenzugriffen ergibt sich bei Codesprüngen durch die vorliegende Erfindung der Vorteil, daß die Verwaltung des Codedeskriptors, die wegen der für die CPU maximal adressierbare Speichergröße erforderlich ist, nicht durch softwaremäßiges Umstellen des Codedeskriptors erzielt werden muß, sondern daß die Umstellung durch einen Frei-Operationscodeidentifikator erzielt werden kann, der einem 20-Bit-Sprungbefehl entspricht, und auf den die Unterstützungseinrichtung 40 anspricht, um der CPU 30 Informationen zuzuführen, die sich auf die 20-Bit-Adresse beziehen, und gleichzeitig den Codedeskriptor zu aktualisieren bzw. anzupassen. Insbesondere bei Sprüngen mit Rückkehrabsicht, bei denen der softwaretechnische Aufwand zum Neu- und Rückeinstellen des Codedeskriptors sehr aufwendig ist, bietet ein Sprung-Frei-Operationscodeidentifikator einen erheblichen Vorteil. Zudem bleibt die Verwendung von Sprungbefehlen aus dem Befehlssatz 290 weiterhin möglich, da die Unterstützungseinrichtung 40 für die CPU-Operationscodes, die dem Befehlssatz 290 festlegen, durchlässig ist und auf dieselben nicht anspricht. Die Sprungbefehle aus dem Befehlssatz 290 werden folglich bezüglich des aktuell eingestellten oder eines festen Speicherfensters 370 ausgeführt.

Es wird darauf hingewiesen, daß ähnlich zu den Datenzugriffen, wie sie Bezug nehmend auf Fig. 2 beschrieben wurden, auch bei Codesprüngen verschiedene Möglichkeiten zur Bildung der 20-Bit-Adresse bestehen, auf die sich der Sprung-Befehl bezieht. Insbesondere ist ein Frei-Operationscode denkbar, der entsprechend dem Ausführungsbeispiel von Fig. 2 eine indirekte Adressierung verwendet.

Nachdem im Vorhergehenden die Funktionsweise des Controllers von Fig. 1 in Bezug auf die Funktionsweise bei Auftreten von Frei-Operationscodes beschrieben worden ist, die sich auf Codesprünge bzw. Datenzugriffe beziehen, werden im folgenden spezielle Ausführungsbeispiele beschrieben, die sich auf verschiedene mögliche Abwandlungen und Verbesserungen der im Vorhergehenden vereinfachten Darstellung beziehen.

Es kann vorgesehen sein, die von der Unterstützungseinrichtung 40 ausgeführten Befehle, denen die Frei-Operationscodes zugewiesen sind, als atomare Befehle zu realisieren, die nicht durch Interruptsignale auf der Interruptleitung 90 von der CPU 30 oder auf der Interruptleitung 130 von der MMU 50 zu der Unterstützungseinrichtung 40 unterbrochen werden können. In diesem Fall hält die Unterstützungseinrichtung ankommende Unterbrechungssignale auf. Daneben ist es ferner möglich weitere Frei-Operationscodes 310 zu verwenden, um nichtunterbrechbare Codesequenzen als atomare Befehle zu realisieren.

Obwohl im Vorhergehenden beschrieben worden ist, daß sowohl das Code- als auch das Datenspeicherfenster 370 bzw. 380 64 kByte groß ist, und daß lediglich ein Code- und ein Datendeskriptor 330 bzw. 340 in der MMU 50 verwaltet werden, kann es ferner vorgesehen sein, daß das Codespeicherfenster 370 und/oder das Datenspeicherfenster 380 in mehrere Segmente unterteilt werden, die zusammen 64 kByte ergeben. Mögliche Segmentgrößen sind beispielsweise 16 kByte oder 32 kByte. In dem Fall einer 32 kByte Segmentgröße der Speicherfenster 370 und 380 würden zwei Datendeskriptoren und zwei Codedeskriptoren in der MMU 50 verwaltet werden. Es könnte beispielsweise vorgesehen sein, daß jeweils ein Speichersegment bezüglich des ROM- und XRAM-Speicherbereiches und das jeweils andere Speichersegment bezüglich des EEPROM-Speicherbereiches zu verwenden. Bei 20-Bit-Sprüngen würden die zwei Deskriptoren oder auch nur einer automatisch adaptiert werden. Bei einem 32k-Programmzählerüberlauf, d.h. Überschreiten des Programmzählers 240 von 32k, würde die MMU 50 automatisch inkrementiert bzw. dekrementiert werden. Ober- und Unterlauf müßten auch für relative Sprünge korrekt behandelt werden. Bei relativen Sprüngen, die aus einem Segment rauslaufen, wird beispielsweise der Programmzähler in der CPU angepaßt und die MMU-Deskriptoren werden umgestellt. Bei Verlassen des Programmzählers eines Segments, einem sogenannten Autoinkrementer, wird beispielsweise genau wie bei relativen Sprüngen verfahren.

Ferner ist es möglich, daß es mehrere Bänke von internen Registern, wie z.B. der Register R1 bis R3, gibt, und daß bei Zugriff oder Abfrage des Inhalts der Register R1 bis R3 durch die Unterstützungseinrichtung, wie es im vorhergehenden beschrieben wurde, die gerade eingestellte Bank verwendet wird. Darüber hinaus können allgemein auch andere internen Register der CPU als die oben erwähnten Register R0-R7, dadr und DPTR zur indirekten Adressierung verwendet werden.

Bezugnehmend auf die vorhergehende Beschreibung wird darauf hingewiesen, daß bezüglich des Aufbaus des Controllers von Fig. 1 verschiedene Modifikationen möglich sind. So ist es beispielsweise nicht erforderlich, daß die MMU 50 und die Unterstützungseinrichtung 40 voneinander getrennt sind. Die Deskriptoren und die Stackerweiterung können beispielsweise durch der Unterstützungseinrichtung 40 bzw. eine Einrichtung derselben verwaltet werden. Bei Verzicht auf die Unterstützung von Programmen, die Speicherzugriffsbefehls bzw. Sprungbefehle des Befehlssatzes 290 der CPU 30 verwenden, sondern lediglich Unterstützung von Programmen, die für Code-Sprünge und Datenzugriffe Frei-Operationscodes verwenden, kann ferner auf den Datendeskriptor vollständig verzichtet werden. Der Vorteil von Programmen, die lediglich 20-Bit-Datenzugriffs- bzw. Sprung-Befehle verwenden, besteht darin, daß für solche Programme ein kontinuierlich adressierbarer Speicher mit einer Größe von 1 Megabyte zu sehen bzw. adressierbar wäre. Ferner wird darauf hingewiesen, daß der Aufbau der CPU anders gestaltet sein kann, so daß beispielsweise das Akkumulatorregister 250, der Stack-Zeiger 230 und der Programmzähler 240 in dem IRAM 220 verwaltet sein können. Das IRAM kann außerdem aus jeglicher anderen Speicherart oder einer Kombination derselben bestehen, wie z.B. einem NVM.

In Bezug auf die in Fig. 2 und 3 dargestellten Abläufe wird darauf hingewiesen, daß dieselben in Bezug auf die Reihenfolge der Schritte verändert werden können.

Zusätzlich und alternativ zu dem beschriebenen 20-Bit-Codesprungbefehl mit Rückkehrabsicht (FCALL), bei dem drei Byte auf den Stack gelegt und die MMU automatisch umkonfiguriert wird, können ein 20-Bit-Codesprungbefehl ohne Rückkehrabsicht (FJMP), der wie der zuvor beschriebene 20-Bit-FCALL-Befehl jedoch ohne Abspeicherung der Rücksprungdaten in dem Stack ausgeführt wird, vorgesehen sein. Beispielsweise werden bei allen 20-Bit-Sprungbefehlen mit Rücksprungoption bzw. Rückkehrabsicht drei Bytes in den Stack geschrieben, wobei die CPU-Rücksprungbefehle (RET) so vorgesehen werden, daß drei Bytes vom Stack geholt werden. Basierend auf den vom Stack geholten Bytes könnte auch der Codedeskriptor auf den Stand vor dem letzten CALL-Befehl gebracht werden. Für jeden Interruptpegel kann ein getrennter Kontext abgespeichert werden, um bei Auftreten eines Rücksprunges, d.h. eines Rücksprungbefehls auf den Befehlssatz 290, nicht den alten Kontext wiederherstellen zu müssen.

Das vorhergehende Ausführungsbeispiel eines Controllers löst folglich mehrere Probleme, die bei der Verwendung einer in Hinblick auf die Verarbeitungsgeschwindigkeit zwar ausreichenden aber in Hinblick auf die Adressierungskapazität ungenügenden Architektur basieren. Der im Vorhergehenden beschriebene Controller ermöglicht es, auf Daten in einem erweiterten Adreßraum direkt effizient zuzugreifen. Bei einer speziellen Realisierung beträgt die Zugriffszeit lediglich zwei Taktzyklen länger als bei Zugriffen auf Daten in dem aktuell eingestellten Speicherfenster. Zusätzlich läßt sich bei Verwendung einer gemischten, sowohl direkten als auch indirekten Adressierung, unter Verwendung von beispielsweise dem Datenzeiger und einem freien Abschnitt des Frei-Operationscodes von vier Bits mittels des 24-Bit-Addierers in der Unterstützungseinrichtung ohne Veränderung der Datenzeigers auf mehrere Bytes (2⁴ = 16 Bytes) benachbarte Daten direkt zugreifen, indem die acht Bits als Versatz bezüglich der aus dem Adreßabschnitt des Frei-Operationscodes und dem Datenzeiger gebildeten Adresse verwendet werden. Die Codesegmentierung durch die MMU wird dadurch entschärft, daß der Programmierer die MMU nicht mehr explizit umkonfigurieren muß, um einen Code in einem nicht eingestellten Speicherfenster auszuführen. Das Umkonfigurieren und Wiederherstellen geschieht vollautomatisch durch Verwendung von auf Frei-Operationscodes basierenden 20-Bit-Codesprung- und -Datenzugriffs-Befehlen, so daß der Programmierer den gesamten physikalischen Adreßraum von 1 MB als linear adressierbaren Adreßraum sieht, wobei gleichzeitig eine Abwärtskompatibilität zu Programmen beibehalten wird, die lediglich auf dem Befehlssatz der CPU basieren., Für generische Zeiger wird anstelle der aufwendigen softwaretechnischen Decodierung eine hardwaretechnische Decodierung verwendet, die eine wesentlich schnellere Verarbeitung zuläßt. Wie auch bei 20-Bit-Datenzugriffen kann auch bei der Behandlung von generischen Zeigern ein Versatzwert von einem unbenutzten Abschnitt des Frei-Operationscodeidentifikators verwendet werden, um effizient auf hintereinanderliegende Daten ohne Änderung eines Datenzeigers zuzugreifen. Zudem können der interne Stackbereich um einen externen erweitert und nicht unterbrechbare Codesequenzen als atomare Befehle realisiert werden. Erreicht werden diese Neuerungen und Verbesserungen mit nur wenigen Eingriffen in ein bestehendes CPU-Layout, indem Frei-Operationscodeidentifikatoren in Operationscodeidentifikator-Sequenzen übersetzt und die CPU-externen Steuersignale durch eine Unterstützungseinrichtung bzw. Shell (Schale), die als Zustandsmaschine ausgeführt sein kann, so modifiziert werden, daß die Befehle nach außen wie die gewünschten Befehle aussehen.

Insbesondere im Chipkartenbereich ergibt sich durch die vorliegende Erfindung der Vorteil, daß ein Leistungsfähigkeitsüberschuß und ein Codezusatzaufwand beim Kunden minimiert wird, und daß gleichzeitig eine effiziente Compilerunterstützung erzielt wird.

Hinsichtlich der MMU und der Unterstützungseinrichtung wird darauf hingewiesen, daß dieselben als eine Einheit realisiert sein können.

Abschließend wird darauf hingewiesen, daß die vorliegende Erfindung ferner auf andere Controller-Architekturen anwendbar ist als die oben erwähnte 8051-Architektur, und daß folglich auch die Speichergrößenangaben bezüglich der Speicherfenster und des Speichers sowie das byteweise Auslesen und die Anzahl von Adreß- und Datenleitungen lediglich exemplarische Bespiele darstellen.

### Bezugszeichenliste

- 10: Controller
- 20: Speicher
- 30: zentrale Verarbeitungseinheit (CPU)
- 40: Unterstützungseinrichtung
- 50: Speicherverwaltungseinheit (MMU)
- 60: Datenleitung
- 80: Adreßleitung
- 90: Interruptleitung
- 100: Datenleitung
- 120: Adreßleitung
- 130: Interruptleitung
- 140: Datenleitung
- 150: Datenleitung
- 180: Adreßleitung
- 190: Adreßleitung
- 210: Decodierer
- 220: IRAM
- 230: Stack-Zeiger
- 240: Programmzähler
- 245: Datenzeigerregister
- 250: Akkumulator
- 260: Interne Register
- 270: Stack
- 280: CPU-Operationscodes
- 290: Befehlssatz
- 300: Decodierer
- 310: Frei-Operationscodes
- 320: Addierer
- 325: externes Datenzeigerregister
- 330: Datendeskriptor
- 340: Codedeskriptor
- 350: Interruptdeskriptor
- 370: Codespeicherfenster
- 380: Datenspeicherfenster
- 542: Leitung
- 800: Controller
- 805: zentrale Verarbeitungseinheit (CPU)
- 810: Speicherverwaltungseinheit (MMU)
- 815: Speicher
- 820: Adreßleitung
- 825: Datenleitung
- 840: Adreßleitung
- 845: Datenleitung
- 855: Befehlssatz
- 860: Datendeskriptor
- 865: Codespeicherfenster
- 870: Verwaltungscode
- 875: Codedeskriptor
- 880: Datenspeicherfenster
- 885: interne Register
- 890: Stack

## Patentansprüche

1. Verfahren zum Ansteuern einer zentralen Verarbeitungseinheit (30) zur Adressierung bezüglich eines Speichers (20), wobei der zentralen Verarbeitungseinheit (30) ein Satz von Operationscodeidentifikatoren zugeordnet ist, der zumindest einen Spezial-Operationscodeidentifikator umfaßt, wobei die zentrale Verarbeitungseinheit (30) angeordnet ist, um einen ersten Speicherbereich (370, 380) mit einer ersten Speichergröße des Speichers (20) zu adressieren, wobei das Verfahren folgende Schritte aufweist:
Überwachen (615) eines Datenverkehrs von dem Speicher (20) zu der zentralen Verarbeitungseinheit (30) durch eine Unterstützungseinrichtung (40), die mit der zentralen Verarbeitungseinheit (30) gekoppelt ist;
in dem Fall, in dem der Datenverkehr von dem Speicher (20) zu der zentralen Verarbeitungseinheit (30) den Spezial-Operationscodeidentifikator (310) umfaßt,
Bilden (630) einer neuen Adresse durch die Unterstützungseinrichtung (40), wobei die neue Adresse in einem zweiten Speicherbereich (20) mit einer zweiten Speichergröße des Speichers (20) definiert ist, wobei die zweite Speichergröße größer als die erste Speichergröße ist;
Liefern (645) eines vorbestimmten Operationscodeidentifikators, dem ein Sprungbefehl aus einem Befehlssatz der zentralen Verarbeitungseinheit (30) zugewiesen ist, zu der zentralen Verarbeitungseinheit (30) durch die Unterstützungseinrichtung (40), wobei der vorbestimmte Operationscodeidentifikator eine Zieladresse bezüglich des ersten Speicherbereichs (370, 380) aufweist; und
Verwalten (660) eines Codedeskriptors (340) durch die Unterstützungseinrichtung (40), der zusammen mit der Zieladresse die neue Adresse ergibt.

2. Controller mit
einer zentralen Verarbeitungseinheit (30) mit einem Satz von Operationscodeidentifikatoren (280, 310), der zumindest einen Spezial-Operationscodeidentifikator umfaßt, wobei die zentrale Verarbeitungseinheit (30) angeordnet ist, um einen ersten Speicherbereich (370, 380) mit einer ersten Speichergröße eines Speichers (20) zu adressieren; und
einer Unterstützungseinrichtung (40), die mit der zentralen Verarbeitungseinheit (30) so gekoppelt ist, um einen Datenverkehr von dem Speicher (20) zu der zentralen Verarbeitungseinheit (30) zu überwachen,
wobei die Unterstützungseinrichtung (40) angeordnet ist, um in dem Fall, in dem der Datenverkehr von dem Speicher (20) zu der zentralen Verarbeitungseinheit (30) den Spezial-Operationscodeidentifikator (310) umfaßt,
eine-neue Adresse zu bilden, wobei die neue Adresse in einem zweiten Speicherbereich (20) mit einer zweiten Speichergröße des Speichers (20) definiert ist, wobei die zweite Speichergröße größer als die erste Speichergröße ist, und
einen vorbestimmten Operations code identifikator, dem ein Sprungbefehl aus einem Befehlssatz der zentralen Verarbeitungseinheit (30) zugewiesen ist, zu der zentralen Verarbeitungseinheit (30) zu liefern, wobei der vorbestimmte Operationscodeidentifikator eine Zieladresse bezüglich des ersten Speicherbereichs (370, 380) aufweist; und
einen Codedeskriptor (340) zu verwalten, der zusammen mit der Zieladresse die neue Adresse ergibt.

3. Controller gemäß Anspruch 2, bei dem der Satz von Operationscodeidentifikatoren (280, 310) eine Mehrzahl von Operationscodeidentifikatoren aufweist, denen Befehle zugewiesen sind, die den Befehlssatz (290) der zentralen Verarbeitungseinheit (30) festlegen, und wobei dem Spezial-Operationscodeidentifikator (310) kein Befehl aus dem Befehlssatz (290) der zentralen Verarbeitungseinheit (30) zugewiesen ist.

4. Controller gemäß Anspruch 2 oder 3, der ferner folgendes Merkmal aufweist:
ein externes Register zum Speichern des Codedeskriptors, wobei das externe Register extern zu der zentralen Verarbeitungseinheit (30) angeordnet ist, wobei der Codedeskriptor vorgesehen ist, um die Lage des ersten Speicherbereichs (370) innerhalb des zweiten Speicherbereichs (20) zu definieren;
wobei die Unterstützungseinrichtung (40) angeordnet ist, um in dem Fall, in dem der Datenverkehr von dem Speicher zu der zentralen Verarbeitungseinheit den Spezial-Operationscodeidentifikator umfaßt,
einen Wert des Codedeskriptors (340) derart einzustellen, daß die neue Adresse in dem ersten Speicherbereich enthalten ist, und
die Zieladresse bezüglich des ersten Speicherbereichs (370) derart einzustellen, daß die Zieladresse bezüglich des ersten Speicherbereichs (370) in Bezug auf den zweiten Speicherbereich der neuen Adresse entspricht.

5. Controller gemäß Anspruch 4, der ferner folgendes Merkmal aufweist:
einen Programmzähler (240), der in der zentralen Verarbeitungseinheit (30) umfaßt ist, und in dem eine Codeadresse bezüglich des ersten Speicherbereichs (370) gespeichert ist,
eine Einrichtung (50), die mit der zentralen Verarbeitungseinheit (40) gekoppelt ist, um einen Datenverkehr von der zentralen Verarbeitungseinheit (30) zu dem Speicher (20) zu überwachen, und angeordnet ist, um in dem Fall, in dem der Datenverkehr von der zentralen Verarbeitungseinheit (30) zu dem Speicher (20) die Codeadresse bezüglich des ersten Speicherbereichs umfaßt,
dieselbe basierend auf dem Inhalt des Codedeskriptors (340) zu manipulieren, um die neue Adresse bezüglich des zweiten Speicherbereichs (20) zu erhalten; und
dieselbe in geänderter Form an den Speicher (20) weiterzuleiten, um auf den Speicher (20) zuzugreifen.

6. Controller gemäß einem der Ansprüche 2 bis 5, bei dem die zentrale Verarbeitungseinheit (30) angeordnet ist, um ansprechend auf den zugeführten vorbestimmten Operationscodeidentifikator zur Anforderung eines nächsten zu verarbeitenden Operationscodeidentifikators
die Zieladresse in einem Programmzähler (240) der zentralen Verarbeitungseinheit (30) zu speichern, und
dieselbe innerhalb des Datenverkehrs von der zentralen Verarbeitungseinheit (30) zu dem Speicher (20) auszugeben.

7. Controller gemäß einem der Ansprüche 2 bis 6, bei dem die zentrale Verarbeitungseinheit (30) ferner einen Stapelspeicher (270) und einen Stapelspeicherzeiger (230) aufweist, der eine Position in dem Stapelspeicher (270) anzeigt, an der durch die zentrale Verarbeitungseinheit (30) aktuell von dem Stapelspeicher (270) Daten entnommen oder hinzugefügt werden können, und bei dem die Unterstützungseinrichtung (40) angepaßt ist, um ferner zumindest einen weiteren vorbestimmten Operationscodeidentifikator zu der zentralen Verarbeitungseinheit (30) zu liefern, wobei dem zumindest einen weiteren Operationscodeidentifikator ein Befehl aus dem Befehlssatz der zentralen Verarbeitungseinheit (30) zum Befüllen des Stapelspeichers an dem Stapelspeicherzeiger mit einem Wert zugewiesen ist, der von einer aktuellen Adresse bezüglich des zweiten Speicherbereichs abhängt, an der der auf den Spezial-Operationscodeidentifikator folgende Operationscodeidentifikator angeordnet ist.

8. Controller gemäß einem der Ansprüche 2 bis 7, bei dem die Zieladresse ein niedrigwertigerer Teil der neuen Adresse und der Deskriptor ein höherwertiger Teil der neuen Adresse ist.

9. Verfahren zum Ansteuern einer zentralen Verarbeitungseinheit (30) zur Adressierung bezüglich eines Speichers (20), wobei der zentralen Verarbeitungseinheit (30) ein Satz von Operationscodeidentifikatoren zugeordnet ist, der zumindest einen Spezial-Operationscodeidentifikator umfaßt, wobei die zentrale Verarbeitungseinheit (30) angeordnet ist, um einen ersten Speicherbereich (370, 380) mit einer ersten Speichergröße des Speichers (20) zu adressieren, wobei das Verfahren folgende Schritte aufweist:
Überwachen (420) eines Datenverkehrs von dem Speicher (20) zu der zentralen Verarbeitungseinheit (30) und eines Datenverkehrs von der zentralen Verarbeitungseinheit (30) zu dem Speicher (20) durch eine Unterstützungseinrichtung (40), die mit der zentralen Verarbeitungseinheit (20) gekoppelt ist;
falls der Datenverkehr von dem Speicher (20) zu der zentralen Verarbeitungseinheit (30) den Spezial-Operationscodeidentifikator umfaßt,
Bilden (440) einer neuen Adresse durch die Unterstützungseinrichtung (40), wobei die neue Adresse in einem zweiten Speicherbereich (20) mit einer zweiten Speichergröße des Speichers (20) definiert ist, wobei die zweite Speichergröße größer als die erste Speichergröße ist,
Zuführen (445) eines vorbestimmten Operationscodeidentifikators, dem ein Datenzugriffsbefehl aus einem Befehlssatz der zentralen Verarbeitungseinheit (30) zugewiesen ist, zu der zentralen Verarbeitungseinheit (30) durch die Unterstützungseinrichtung (40); und
Manipulieren (455) einer im vorbestimmten Operationscodeidentifikator enthaltenen Adresse, die bezüglich des ersten Speicherbereichs (380) definiert ist, innerhalb des Datenverkehrs von der zentralen Verarbeitungseinheit (30) zu dem Speicher (20) basierend auf der neuen Adresse durch die Unterstützungseinrichtung (40), um eine manipulierte Adresse bezüglich des zweiten Speicherbereichs zu erhalten.

10. Controller mit
einer zentralen Verarbeitungseinheit (30) mit einem Satz von Operationscodeidentifikatoren (280, 310), der zumindest einen Spezial-Operationscodeidentifikator umfaßt, wobei die zentrale Verarbeitungseinheit (30) angeordnet ist, um einen ersten Speicherbereich (370, 380) mit einer ersten Speichergröße eines Speichers (20) zu adressieren;
einer Unterstützungseinrichtung (40), die mit der zentralen Verarbeitungseinheit (30) so gekoppelt ist, um einen Datenverkehr von dem Speicher (20) zu der zentralen Verarbeitungseinheit (30) und einen Datenverkehr von der zentralen Verarbeitungseinheit (30) zu dem Speicher (20) zu überwachen,
wobei die Unterstützungseinrichtung angeordnet ist, um in dem Fall, daß der Datenverkehr von dem Speicher (20) zu der zentralen Verarbeitungseinheit (30) den Spezial-Operationscodeidentifikator umfaßt,
eine neue Adresse zu bilden, wobei die neue Adresse in einem zweiten Speicherbereich (20) mit einer zweiten Speichergröße des Speichers (20) definiert ist, wobei die zweite Speichergröße größer als die erste Speichergröße ist,
einen vorbestimmten Operationscodeidentifikator, dem ein Datenzugriffsbefehl aus einem Befehlssatz der zentralen Verarbeitungseinheit (30) zugewiesen ist, zu der zentralen Verarbeitungseinheit (30) zuzuführen; und
eine im vorbestimmten Operationscodeidentifikator enthaltene Adresse, die bezüglich des ersten Speicherbereichs (380) definiert ist, innerhalb des Datenverkehrs von der zentralen Verarbeitungseinheit (30) zu dem Speicher (20) basierend auf der neuen Adresse zu manipulieren, um eine manipulierte Adresse bezüglich des zweiten Speicherbereichs zu erhalten.

11. Controller gemäß Anspruch 10, bei dem der Satz von Operationscodeidentifikatoren (280, 310) eine Mehrzahl von Operationscodeidentifikatoren aufweist, denen Befehle zugewiesen sind, die den Befehlssatz (290) der zentralen Verarbeitungseinheit (30) festlegen, und wobei dem Spezial-Operationscodeidentifikator (310) kein Befehl aus dem Befehlssatz (290) der zentralen Verarbeitungseinheit (30) zugewiesen ist.

12. Controller gemäß Anspruch 10 oder 11, bei der der vorbestimmte Operationscodeidentifikator einem Schreib- oder Lesebefehl des Befehlssatzes (290) der zentralen Verarbeitungseinheit (30) zugewiesen ist.

13. Controller gemäß einem der Ansprüche 10 bis 12, bei dem sich der Befehl auf eine Zugriffsadresse bezüglich des ersten Speicherbereichs (380) bezieht, die einem Abschnitt der neuen Adresse entspricht, und bei dem die Unterstützungseinrichtung (40) angeordnet ist, um beim Manipulieren der bezüglich des ersten Speicherbereichs (380) definierten Adresse innerhalb des Datenverkehrs und der zentralen Verarbeitungseinheit (30) zu dem Speicher (20)
dieselbe um einen restlichen Abschnitt der neuen Adresse zu ergänzen.

14. Controller gemäß einem der Ansprüche 10 bis 13, bei dem sich der Befehl auf eine Zugriffsadresse bezüglich des ersten Speicherbereichs (380) bezieht, und bei dem die Unterstützungseinrichtung (40) angeordnet ist, um beim Manipulieren der bezüglich des ersten Speicherbereichs (380) definierten Adresse innerhalb des Datenverkehrs von der zentralen Verarbeitungseinheit zu dem Speicher (20)
dieselbe durch die neue Adresse zu ersetzen.

15. Controller gemäß einem der Ansprüche 13 oder 14, bei dem sich der Befehl ferner auf einen Versatzwert bezieht, und bei dem die Unterstützungseinrichtung (40) angeordnet ist, um zu der manipulierten Adresse den Versatzwert zu addieren.

16. Controller gemäß einem der Ansprüche 10 bis 15, der ferner folgendes Merkmal aufweist:
ein externes Register zum Speichern einer Adresse (330), wobei das externe Register extern zu der zentralen Verarbeitungseinheit (30) angeordnet ist, wobei diese Adresse (330) vorgesehen ist, um eine Lage des ersten Speicherbereichs (380) innerhalb des zweiten Speicherbereichs (20) anzugeben,
eine Einrichtung (50), die mit der zentralen Verarbeitungseinheit (30) gekoppelt ist, um den Datenverkehr von der zentralen Verarbeitungseinheit zu dem Speicher (20) zu überwachen, und angeordnet ist, um in dem Fall, daß der Datenverkehr von der zentralen Verarbeitungseinheit (30) zu dem Speicher (20) eine Adresse, die bezüglich des ersten Speicherbereichs (380) definiert ist, umfaßt,
dieselbe basierend auf einem Inhalt des externen Registers (330) zu manipulieren, um eine entsprechende Adresse bezüglich des zweiten Speicherbereichs (20) zu erhalten, und
dieselbe in geänderter Form an den Speicher (20) weiterzuleiten, um auf den Speicher (20) zuzugreifen,
und wobei die Unterstützungseinrichtung (40) angeordnet ist, um in dem Fall, daß der Datenverkehr von dem Speicher (20) zu der zentralen Verarbeitungseinheit (30) den Spezial-Operationscodeidentifikator umfaßt,
den Inhalt des externen Registers (330) derart anzupassen, daß der erste Speicherbereich (380) die manipulierte Adresse enthält,
und in dem Fall, daß der Datenverkehr von dem Speicher (20) zu der zentralen Verarbeitungseinheit (30) einen Operationscodeidentifikator der Mehrzahl von Operationscodeidentifikatoren umfaßt, dem ein Lese- oder Schreibbefehl auf dem Befehlssatz (290) der zentralen Verarbeitungseinheit (30) zugewiesen ist,
denselben an die zentrale Verarbeitungseinheit weiterzuleiten, und
die Adresse, die bezüglich des ersten Speicherbereichs definiert ist, in dem Datenverkehr von der zentralen Verarbeitungseinheit (30) zu dem Speicher (20) unverändert zu belassen.

17. Controller gemäß Anspruch 10, bei dem der Spezial-Operationscodeidentifikator einem Befehl zur Handhabung eines generischen Zeigers entspricht, wobei der generische Zeiger aus einer Adreßangabe und einer Adressierungsartangabe besteht, wobei die Adreßangabe der neuen Adresse entspricht, und wobei die Adressierungsartangabe angibt, daß sich die Adreßangabe auf den zweiten Speicherbereich bezieht.

18. Controller gemäß Anspruch 17, bei dem die Unterstützungseinrichtung (40) angeordnet ist, um in dem Fall, in dem der Datenverkehr von dem Speicher (20) zu der zentralen Verarbeitungseinheit (30) einen Spezial-Operationscodeidentifikator umfaßt, der einem Befehl zur Handhabung eines generischen Zeigers entspricht, der aus einer Adreßangabe und einer Adressierungsartangabe besteht,
die Adressierungsartangabe zu überprüfen,
in dem Fall, daß die Adressierungsartangabe angibt, daß sich die Adreßangabe auf den zweiten Speicherbereich bezieht, die Bildung der neuen Adresse, die Zuführung des vorbestimmten Operationscodeidentifikators und die Manipulierung der Adresse durchzuführen, und
in dem Fall, daß die Adressierungsartangabe angibt, daß sich die Adreßangabe auf den ersten Speicherbereich bezieht, der zentralen Verarbeitungseinheit einen Operationscodeidentifikator zuzuführen, dem ein Befehl aus dem Befehlssatz (290) zugewiesen ist, der sich auf die Adreßangabe bezieht.

19. Controller gemäß einem der Ansprüche 2 bis 8 oder 10 bis 18, bei dem die zentrale Verarbeitungseinheit (30) zumindest ein internes Register (260) aufweist, und die Unterstützungseinrichtung (40) mit der zentralen Verarbeitungseinheit (30) so gekoppelt ist, um den Inhalt des zumindest einen internen Registers zu ermitteln, und angeordnet ist, um beim Bilden der neuen Adresse
den Inhalt des zumindest einen internen Registers zu ermitteln, und
aus dem Inhalt des zumindest einen internen Registers die neue Adresse zu bilden.

20. Controller gemäß einem der Ansprüche 2 bis 8 oder 10 bis 18, der zumindest ein externes Datenzeigerregister (325) aufweist, das extern zu der zentralen Verarbeitungseinheit angeordnet ist, und bei dem die Unterstiftzungseinrichtung (40) angeordnet ist, um beim Bilden der neuen Adresse
den Inhalt des zumindest einen externes Datenzeigerregisters (325) zu ermitteln, und
aus dem Inhalt des zumindest einen externen Datenzeigerregisters (325) die neue Adresse zu bilden.

21. Controller gemäß einem der Ansprüche 2 bis 8 oder 10 bis 20, bei dem die Unterstützungseinrichtung (40) angeordnet ist, um beim Bilden der neuen Adresse
die neue Adresse zumindest teilweise aus einem Adreßabschnitt des Operationscodeidentifikators zu bilden.

22. Controller gemäß Anspruch 21, bei dem die Unterstützungseinrichtung (40) angeordnet ist, um beim Bilden der neuen Adresse aus zumindest teilweise dem Adreßabschnitt des Operationscodeidentifikators
der zentralen Verarbeitungseinheit (30) den oder einen anderen Spezial-Operationscodeidentifikator zuzuführen, und
bei dem die zentrale Verarbeitungseinheit (30) einen Programmzähler aufweist, in dem eine Codeadresse bezüglich des ersten Speicherbereichs gespeichert ist, und die zentrale Verarbeitungseinheit (30) angeordnet ist, um
einen nächsten zu verarbeitenden Operationscodeidentifikator mittels der Codeadresse anzufordern, und
ansprechend auf den der zentralen Verarbeitungseinheit (30) zugeführten Spezial-Operationscodeidentifikator den Programmzähler (240) zu erhöhen und den der zentralen Verarbeitungseinheit (30) zugeführten Spezial-Operationscodeidentifikator ansonsten zu ignorieren.

23. Controller gemäß einem der Ansprüche 2 bis 8 oder 10 bis 22, bei dem die Unterstützungseinrichtung (40) angeordnet ist, um in dem Fall, in dem in dem Datenverkehr von dem Speicher (20) zu der zentralen Verarbeitungseinheit (30) der Spezial-Operationscodeidentifikator (310) umfaßt ist,
ankommende Unterbrechungssignale aufzuhalten.

## Claims

1. A method for controlling a central processing unit (30) for addressing in relation to a memory (20), wherein a set of operation code identifiers including at least one special operation code identifier is associated to the central processing unit (30), wherein the central processing unit (30) is arranged to address a first memory area (270, 380) having a first memory size of the memory (20), wherein the method comprises the following steps:
monitoring (615) a data traffic from the memory (20) to the central processing unit (30) by supporting means (40) coupled to the central processing unit (30);
in the case in which the data traffic from the memory (20) to the central processing unit (30) includes the special operation code identifier (310),
forming (630) a new address by the supporting means (40), wherein the new address is defined in a second memory area (20) having a second memory size of the memory (20), wherein the second memory size is larger than the first memory size;
providing (645) a predetermined operation code identifier to which a jump command from a command set of the central processing unit (30) is assigned, to the central processing unit (30) by the supporting means (40), wherein the predetermined operation code identifier has a destination address in relation to the first memory area (370, 380); and
managing (660) a code descriptor (340) by the supporting means (40), yielding, together with the destination address, the new address.

2. A controller having:
a central processing unit (30) having a set of operation code identifiers (280, 310) including at least one special operation code identifier, wherein the central processing unit (30) is arranged to address a first memory area (370, 380) having a first memory size of a memory (20); and
supporting means (40) coupled to the central processing unit (30) to monitor a data traffic from the memory (20) to the central processing unit (30),
wherein the supporting means (40) is arranged to perform, in the case in which the data traffic from the memory (20) to the central processing unit (30) includes the special operation code identifier (310), the following steps:
forming a new address, wherein the new address is defined in a second memory area (20) having a second memory size of the memory (20), wherein the second memory area is larger than the first memory area, and
providing a predetermined operation code identifier to which a jump command from a command set of the central processing unit (30) is assigned, to the central processing unit (30), wherein the predetermined operation code identifier has a destination address in relation to the first memory area (370, 380); and
managing a code descriptor (340), yielding, together with the destination address, the new address.

3. The controller according to claim 2, wherein the set of operation code identifiers (280, 310) comprises a plurality of operation code identifiers, to which commands are associated determining the command set (290) of the central processing unit (30), and wherein no command from the command set (290) of the central processing unit (30) is assigned to the special operation code identifier (310).

4. The controller according to claim 2 or 3, further comprising:
an external register for storing the code descriptor, wherein the external register is arranged externally of the central processing unit (30), wherein the code descriptor is provided to define the position of the first memory area (370) within the second memory area (20),
wherein the supporting means (40) is arranged to perform, in the case that the data traffic from the memory to the central processing unit includes the special operation code identifier, the following steps:
setting a value of the code descriptor (340) in such a way that the new address is contained in the first memory area, and
setting the destination address in relation to the first memory area (370) in such a way that the destination address in relation to the first memory area (370) corresponds to the new address in relation to the second memory area.

5. The controller according to claim 4, further comprising:
a program counter (240) included in the central processing unit (30), in which a code address in relation to the first memory area (370) is stored;
means (50) coupled to the central processing unit (30) in order to monitor a data traffic from the central processing unit (30) to the memory (20), and arranged to perform, in the case that the data traffic from the central processing unit (30) to the memory (20) includes the code address in relation to the first memory area, the following steps:
manipulating it based on the contents of the code descriptor (340) to obtain the new address in relation to the second memory area (20); and
passing it on to the memory (20) in a changed form in order to access the memory (20).

6. The controller according to one of claims 2 to 5, wherein the central processing unit (30) is arranged to perform, responsive to the supplied predetermined operation code identifier for requesting a next operation code identifier to be processed, the following steps:
storing the destination address in a program counter (240) of the central processing unit (30), and
outputting it within the data traffic from the central processing unit (30) to the memory (20).

7. The controller according to one of claims 2 to 6, wherein the central processing unit (30) further comprises a stack memory (270) and a stack memory pointer (230) indicating a position in the stack memory (270) where data is currently taken from the stack memory (270) by the central processing unit (30) or added to it, and wherein the supporting means (40) is adapted to further provide at least another predetermined operation code identifier to the central processing unit (30), wherein a command from the command set of the central processing unit (30) for filling the stack memory at the stack memory pointer with a value depending on a current address in relation to the second memory area at which the operation code identifier following the special operation code identifier is arranged is assigned to the at least one further operation code identifier.

8. The controller according to one of claims 2 to 7, wherein the destination address is a less significant part of the new address and the descriptor is a more significant part of the new address.

9. A method for controlling a central processing unit (30) for addressing in relation to a memory (20), wherein a set of operation code identifiers including at least a special operation code identifier is associated to the central processing unit (30), wherein the central processing unit (30) is arranged to address a first memory area (370, 380) having a first memory size of the memory (20), wherein the memory comprises the following steps:
monitoring (420) a data traffic from the memory (20) to the central processing unit (30) and a data traffic from the central processing unit (30) to the memory (20) by supporting means (40) coupled to the central processing unit (30);
if the data traffic from the memory (20) to the central processing unit (30) includes the special operation code identifier,
forming (440) a new address by the supporting means (40), wherein the new address is defined in a second memory area (20) having a second memory size of the memory (20), wherein the second memory size is larger than the first memory size;
providing (445) a predetermined operation code identifier to which a data access command from a command set of the central processing unit (30) is assigned, to the central processing unit (30) by the supporting means (40); and
manipulating (455) an address contained in the predetermined operation code identifier and defined in relation to the first memory area (380), within the data traffic from the central processing unit (30) to the memory (20) based on the new address by the supporting means (40) in order to obtain a manipulated address in relation to the second memory area.

10. A controller having:
a central processing unit (30) having a set of operation code identifiers (280, 310) including at least a special operation code identifier, wherein the central processing unit (30) is arranged to address a first memory area (370, 380) having a first memory size of a memory (20);
supporting means (40) coupled to the central processing unit (30) in order to monitor a data traffic from the memory (20) to the central processing unit (30) and a data traffic from the central processing unit (30) to the memory (20),
wherein the supporting means is arranged to perform, in the case that the data traffic from the memory (20) to the central processing unit (30) includes the special operation code identifier, the following steps:
forming a new address, wherein the new address is defined in a second memory area (20) having a second memory size of the memory (20), wherein the second memory size is larger than the first memory size;
providing a predetermined operation code identifier to which a data access command from a command set of the central processing unit (30) is associated, to the central processing unit (30); and
manipulating an address contained in the predetermined operation code identifier and defined in relation to the first memory area (380), within the data traffic from the central processing unit (30) to the memory (20) based on the new address in order to obtain a manipulated address in relation to the second memory area.

11. The controller according to claim 10, wherein the set of operation code identifiers (280, 310) comprises a plurality of operation code identifiers to which commands are assigned determining the command set (290) of the central processing unit (30), and wherein no command from the command set (290) of the central processing unit (30) is associated to the special operation code identifier (310) .

12. The controller according to claim 10 or 11, wherein the predetermined operation code identifier is associated to a write or read command from the command set (290) of the central processing unit (30).

13. The controller according to one of claims 10 to 12, wherein the command relates to an access address in relation to the first memory area (380) corresponding to a portion of the new address, and wherein the supporting means (40) is arranged to perform, when manipulating the address defined in relation to the first memory area (380) within the data traffic from the central processing unit (30) to the memory (20), the following step:
supplementing it by a remaining portion of the new address.

14. The controller according to one of claims 10 to 13, wherein the command relates to an access address in relation to the first memory area (380), and wherein the supporting means (40) is arranged to perform, when manipulating the address defined in relation to the first memory area (380) within the data traffic from the central processing unit to the memory (20), the following step:
replacing it by the new address.

15. The controller according to claim 13 or 14, wherein the command further relates to an offset value, and wherein the supporting means (40) is arranged to add the offset value to the manipulated address.

16. The controller according to one of claims 10 to 15, further comprising:
an external register for storing an address (330), wherein the external register is arranged externally of the central processing unit (30), wherein this address (330) is provided to indicate a position of the first memory area (380) within the second memory area (20);
means (50) coupled to the central processing unit (30) to monitor the data traffic from the central processing unit to the memory (20) and arranged to perform, in the case that the data traffic from the central processing unit (30) to the memory (20) includes an address defined in relation to the first memory area (380), the following steps:
manipulating it based on the contents of the external register (330) to obtain a corresponding address in relation to the second memory area (20), and
passing it on to the memory (20) in a changed form to access the memory (20),
and wherein the supporting means (40) is arranged to perform, in the case that the data traffic from the memory (20) to the central processing unit (30) includes the special operation code identifier, the following step:
adapting the contents of the external register (330) in such a way that the first memory area (380) contains the manipulated address,
and in the case that the data traffic from the memory (20) to the central processing unit (30) includes an operation code identifier of the plurality of operation code identifiers, to which a read or write command from the command set (290) of the central processing unit (30) is associated, to perform the following steps:
passing it on to the central processing unit, and
leaving unchanged the address defined in relation to the first memory area, in the data traffic from the central processing unit (30) to the memory (20).

17. The controller according to claim 10, wherein the special operation code identifier corresponds to a command for handling a generic pointer, wherein the generic pointer consists of an address indication and an addressing type indication, wherein the address indication corresponds to the new address, and wherein the addressing type indication indicates that the address indication refers to the second memory area.

18. The controller according to claim 17, wherein the supporting means (40) is arranged to perform, in the case in which the data traffic from the memory (20) to the central processing unit (30) includes a special operation code identifier corresponding to a command for handling a generic pointer consisting of an address indication and an addressing type indication, the following steps:
checking the addressing type indication,
in the case that the addressing type indication indicates that the address indication refers to the second memory area, performing the formation of the new address, the supply of the predetermined operation code identifier and the manipulation of the address, and
in the case that the addressing type indication indicates that the address indication refers to the first memory area, supplying the central processing unit with an operation code identifier to which a command from the command set (290) referring to the address indication is associated.

19. The controller according to one of claims 2 to 8 or 10 to 18, wherein the central processing unit (30) comprises at least an internal register (260) and the supporting means (40) is coupled to the central processing unit (30) to determine the contents of the at least one internal register, and arranged to perform the following steps when forming the new address:
determining the contents of the at least one internal register, and
forming the new address from the contents of the at least one internal register.

20. The controller according to one of claims 2 to 8 or 10 to 18, comprising at least one external data pointer register (325) arranged externally of the central processing unit, and wherein the supporting means (40) is arranged to perform the following steps when forming the new address:
determining the contents of the at least one external data pointer register (325), and
forming the new address from the contents of the at least one external data pointer register (325).

21. The controller according to one of claims 2 to 8 or 10 to 20, wherein the supporting means (40) is arranged to perform the following step when forming the new address:
forming the new address at least partly from an address portion of the operation code identifier.

22. The controller according to claim 21, wherein the supporting means (40) is arranged to perform the following step when forming the new address at least partly from the address portion of the operation code identifier:
providing the central processing unit (30) with the or another special operation code identifier, and
wherein the central processing unit (30) comprises a program counter in which a code address in relation to the first memory area is stored, and the central processing unit (30) is arranged to perform the following steps:
requesting a next operation code identifier to be processed by means of the code address, and
increasing the program counter (240) responsive to the special operation code identifier supplied to the central processing unit (30) and otherwise ignoring the special operation code identifier supplied to the central processing unit (30).

23. The controller according to one of claims 2 to 8 or 10 to 22, wherein the supporting means (40) is arranged to perform, in the case in which the special operation code identifier (310) is included in the data traffic from the memory (20) to the central processing unit (30), the following step:
stopping incoming interrupt signals.

## Revendications

1. Procédé de commande d'une unité (30) de traitement centrale pour l'adressage relatif à une mémoire (20), un bloc d'identificateurs de codes d'opérations étant attribué à l'unité (30) de traitement centrale, bloc comprenant au moins un identificateur de code d'opération spécial, l'unité (30) de traitement centrale étant disposée, afin d'adresser une première zone (370, 380) de mémoire ayant une première capacité de mémoire de la mémoire (20), le procédé présentant les étapes suivantes :
Surveillance (615) d'une circulation de données de la mémoire (20) vers l'unité (30) de traitement centrale par un dispositif (40) de support, qui est couplé avec l'unité (30) de traitement centrale ;
Au cas où la circulation de données de la mémoire (20) vers l'unité (30) de traitement centrale comprend l'identificateur (310) de code d'opération spécial,
Formation (630) d'une nouvelle adresse par le dispositif (40) de support, la nouvelle adresse étant définie dans une deuxième zone (20) de mémoire ayant une deuxième capacité de mémoire de la mémoire (20), la deuxième capacité de mémoire étant supérieure à la première capacité de mémoire ;
Livraison (645) d'un identificateur de code d'opération prédéterminé, auquel une instruction de saut est attribué à partir d'un bloc d'instructions de l'unité (30) de traitement centrale, à l'unité (30) de traitement centrale par le dispositif (40) de support, l'identificateur de code d'opération prédéterminé présentant une adresse cible relative à la première zone (370, 380) de mémoire ; et
Administration (660) d'un descripteur (340) de code par le dispositif (40) de support, qui donne la nouvelle adresse ensemble avec l'adresse cible.

2. Processeur ayant
Une unité (30) de traitement centrale ayant un bloc d'identificateurs (280, 310) de codes d'opérations, bloc qui comprend au moins un identificateur de code d'opération spécial, l'unité (30) de traitement centrale étant disposée, afin d'adresser une première zone (370, 380) de mémoire ayant une première capacité de mémoire d'une mémoire (20) ; et
Un dispositif (40) de support, qui est couplé avec l'unité (30) de traitement centrale pour surveiller une circulation de données de la mémoire (20) vers l'unité (30) de traitement centrale,
Le dispositif (40) de support étant disposé pour, au cas où la circulation de données de la mémoire (20) vers l'unité (30) de traitement centrale comprend l'identificateur (310) de code d'opération spécial,
Former une nouvelle adresse, la nouvelle adresse étant définie dans une deuxième zone (20) de mémoire ayant une deuxième capacité de mémoire de la mémoire (20), la deuxième capacité de mémoire étant supérieure à la première capacité de mémoire, et
Livrer un identificateur de code d'opération prédéterminé, auquel une instruction de saut est attribuée à partir d'un bloc d'instructions de l'unité (30) de traitement centrale, à l'unité (30) de traitement centrale, l'identificateur de code d'opération prédéterminé présentant une adresse cible relative à la première zone (370, 380) de mémoire ; et
Administrer un descripteur (340) de code, qui donne la nouvelle adresse ensemble avec l'adresse cible.

3. Processeur conforme à la revendication 2, pour lequel le bloc d'identificateurs (280, 310) de codes d'opérations présente une majorité d'identifications de codes d'opérations, auxquels des instructions sont attribuées, qui spécifient le bloc (290) d'instructions de l'unité (30) de traitement centrale, et aucune instruction n'étant attribuée à l'identificateur de code d'opération spécial à partir du bloc (310) d'instructions de l'unité (30) de traitement centrale.

4. Processeur conforme à la revendication 2 ou 3, qui présente en outre la caractéristique suivante :
Un registre externe de mémorisation du descripteur de code, le registre externe étant disposé en externe par rapport à l'unité (30) de traitement centrale, le descripteur de code étant prévu pour définir la position de la première zone (370) de mémoire à l'intérieur de la deuxième zone (20) de mémoire ;
Le dispositif (40) de support étant disposé pour, au cas où la circulation de données de la mémoire vers l'unité de traitement centrale comprend l'identificateur de code d'opération spécial,
Régler une valeur du descripteur (340) de code de telle sorte que la nouvelle adresse soit contenue dans la première zone de mémoire, et
Régler l'adresse cible relative à la première zone (370) de mémoire de telle sorte que l'adresse cible relative à la première zone (370) de mémoire corresponde à la nouvelle adresse en ce qui concerne la deuxième zone de mémoire.

5. Processeur conforme à la revendication 4, qui présente en outre la caractéristique suivante :
Un compteur (240), qui est compris dans l'unité (30) de traitement centrale, et dans lequel une adresse de code relative à la première zone (370) de mémoire est mémorisée,
Un dispositif (50), qui est couplé avec l'unité (40) de traitement centrale, afin de surveiller une circulation de données de l'unité (30) de traitement centrale vers la mémoire (20), et qui est disposé pour, au cas où la circulation de données de l'unité (30) de traitement centrale vers la mémoire (20) comprend l'adresse de code relative à la première zone de mémoire,
Manipuler cette adresse de code en se basant sur le contenu du descripteur (340) de code, afin d'obtenir la nouvelle adresse relative à la deuxième zone (20) de mémoire ; et
Transmettre cette adresse de code sous une forme modifiée à la mémoire (20), afin d'accéder à la mémoire (20).

6. Processeur conforme à l'une des revendications 2 à 5, pour lequel l'unité (30) de traitement centrale est disposée pour, en réponse à l'identificateur de code d'opération prédéterminé livré pour la demande d'un prochain identificateur de code d'opération à traiter,
Mémoriser l'adresse cible dans un compteur (240) de l'unité (30) de traitement centrale, et
Délivrer cette adresse cible à l'intérieur de la circulation de données de l'unité (30) de traitement centrale vers la mémoire (20).

7. Processeur conforme à l'une des revendications 2 à 6, pour lequel l'unité (30) de traitement centrale présente en outre une pile (270) et un pointeur (230) de sommet de pile, qui indique une position dans la pile (270), à laquelle des données peuvent actuellement être extraites de la pile (270) ou ajoutées à la pile (270) par l'unité (30) de traitement centrale, et pour lequel le dispositif (40) de support est adapté pour en outre livrer au moins un autre identificateur de code d'opération prédéterminé à l'unité (30) de traitement centrale, une instruction étant attribuée à cet identificateur ou au moins à un autre identificateur de code d'opération à partir du bloc d'instructions de l'unité (30) de traitement centrale pour le remplissage de la pile au pointeur de sommet de pile ayant une valeur, qui dépend d'une adresse actuelle relative à la deuxième zone de mémoire, à laquelle l'identificateur de code d'opération suivant l'identificateur de code d'opération spécial est disposé.

8. Processeur conforme à l'une des revendications 2 à 7, pour lequel l'adresse cible est une partie de valeur plus faible de la nouvelle adresse et le descripteur est une partie de valeur plus élevée de la nouvelle adresse.

9. Procédé de commande d'une unité (30) de traitement centrale pour l'adressage relatif à une mémoire (20), un bloc d'identificateurs de codes d'opérations étant attribué à l'unité (30) de traitement centrale, bloc qui comprend au moins un identificateur de code d'opération spécial, l'unité (30) de traitement centrale étant disposée, afin d'adresser une première zone (370, 380) de mémoire avec une première capacité de mémoire de la mémoire (20), le procédé présentant les étapes suivantes :
Surveillance (420) d'une circulation de données de la mémoire (20) vers l'unité (30) de traitement centrale et d'une circulation de données de l'unité (30) de traitement centrale vers la mémoire (20) par le dispositif (40) de support, qui est couplé avec l'unité (20) de traitement centrale ;
Au cas où la circulation de données de la mémoire (20) vers l'unité (30) de traitement centrale comprend l'identificateur de code d'opération spécial,
Formation (440) d'une nouvelle adresse par le dispositif (40) de support, la nouvelle adresse étant définie dans une deuxième zone (20) de mémoire ayant une deuxième capacité de mémoire de la mémoire (20), la deuxième capacité de mémoire étant supérieure à la première capacité de mémoire,
Livraison (445) d'un identificateur de code d'opération prédéterminé, auquel une instruction d'accès aux données à partir du bloc d'instructions de l'unité (30) de traitement centrale est attribuée, à l'unité (30) de traitement centrale par le dispositif (40) de support ; et
Manipulation (455) d'une adresse contenue dans l'identificateur de code d'opération prédéterminé, adresse qui est définie relativement à la première zone (380) de mémoire, à l'intérieur de la circulation de données de l'unité (30) de traitement centrale vers la mémoire (20) en se basant sur la nouvelle adresse par le dispositif (40) de support, afin d'obtenir une adresse manipulée relative à la deuxième zone de mémoire.

10. Processeur ayant
Une unité (30) de traitement centrale ayant un bloc d'identificateurs (280, 310) de codes d'opérations, bloc qui comprend au moins un identificateur de code d'opération spécial, l'unité (30) de traitement centrale étant disposée, afin d'adresser une première zone (370, 380) de mémoire ayant une première capacité de mémoire d'une mémoire (20) ;
Un dispositif (40) de support, qui est couplé avec l'unité (30) de traitement centrale pour surveiller une circulation de données de la mémoire (20) vers l'unité (30) de traitement centrale et une circulation de données de l'unité (30) de traitement centrale vers la mémoire (20),
Le dispositif de support étant disposé pour, au cas où la circulation de données de la mémoire (20) vers l'unité (30) de traitement centrale comprend l'identificateur de code d'opération spécial,
Former une nouvelle adresse, la nouvelle adresse étant définie dans une deuxième zone (20) de mémoire ayant une deuxième capacité de mémoire de la mémoire (20), la deuxième capacité de mémoire étant supérieure à la première capacité de mémoire,
Livrer un identificateur de code d'opération prédéterminé, auquel une instruction d'accès aux données à partir d'un bloc d'instructions de l'unité (30) de traitement centrale est attribuée, à l'unité (30) de traitement centrale ; et
Manipuler une adresse contenue dans l'identificateur de code d'opération prédéterminé, adresse qui est définie relativement à la première zone (380) de mémoire, à l'intérieur de la circulation de données de l'unité (30) de traitement centrale vers la mémoire en se basant sur la nouvelle adresse, afin d'obtenir une adresse manipulée relative à la deuxième zone de mémoire.

11. Processeur conforme à la revendication 10, pour lequel le bloc d'identificateurs (280, 310) de code d'opérations présente une majorité d'identificateurs de codes d'opérations, auxquels des instructions sont attribuées, qui spécifient le bloc (290) d'instructions de l'unité (30) de traitement centrale, et aucune instruction n'étant attribuée à l'identificateur (310) de code d'opération spécial à partir du bloc (290) d'instructions de l'unité (30) de traitement centrale.

12. Processeur conforme à la revendication 10 ou 11, pour lequel l'identificateur de code d'opération prédéterminé est attribué à une instruction d'écriture ou de lecture du bloc (290) d'instructions de l'unité (30) de traitement centrale.

13. Processeur conforme à l'une des revendications 10 à 12, pour lequel l'instruction se rapporte à une adresse d'accès relative à la première zone (380) de mémoire, adresse d'accès qui correspond à une partie de la nouvelle adresse, et pour lequel le dispositif (40) de support est disposé pour, lors de la manipulation de l'adresse définie relativement à la première zone (380) de mémoire à l'intérieur de la circulation de données de l'unité (30) de traitement centrale vers la mémoire (20),
Compléter cette adresse avec une partie résiduelle de la nouvelle adresse.

14. Processeur conforme à l'une des revendications 10 à 13, pour lequel l'instruction se rapporte à une adresse d'accès relative à la première zone (380) de mémoire, et pour lequel le dispositif (40) de support est disposé pour, lors de la manipulation de l'adresse définie relativement à la première zone (380) de mémoire à l'intérieur de la circulation de données de l'unité de traitement centrale vers la mémoire (20),
Remplacer cette adresse par la nouvelle adresse.

15. Processeur conforme à l'une des revendications 13 ou 14, pour lequel l'instruction se rapporte en outre à une valeur de remplissage, et pour lequel le dispositif (40) de support est disposé pour ajouter la valeur de remplissage à l'adresse manipulée.

16. Processeur conforme à l'une des revendications 10 à 15, qui présente en outre la caractéristique suivante :
Un registre externe pour la mémorisation d'une adresse (330), le registre externe étant disposé en externe par rapport à l'unité (30) de traitement centrale, cette adresse (330) étant prévue pour indiquer une position de la première zone (380) de mémoire à l'intérieur de la deuxième zone (20) de mémoire,
Un dispositif (50), qui est couplé avec l'unité (30) de traitement centrale, afin de surveiller la circulation de données de l'unité de traitement centrale vers la mémoire (20), et qui est disposé pour, au cas où la circulation de données de l'unité (30) de traitement centrale vers la mémoire (20) comprend une adresse, qui est définie relativement à la première zone (380) de mémoire,
Manipuler cette adresse en se basant sur un contenu du registre (330) externe, afin d'obtenir une adresse appropriée relative à la deuxième zone (20) de mémoire, et
Transmettre cette adresse sous une forme modifiée à la mémoire (20), afin d'accéder à la mémoire (20),
Et le dispositif (40) de support étant disposé pour, au cas où la circulation de données de la mémoire (20) vers l'unité (30) de traitement centrale comprend l'identificateur de code d'opération spécial,
Adapter le contenu du registre (330) externe de telle sorte que la première zone (380) de mémoire contienne l'adresse manipulée,
Et, au cas où la circulation de données de la mémoire (20) vers l'unité (30) de traitement centrale comprend un identificateur de code d'opération de la majorité d'identificateurs de codes d'opérations, identificateur de code d'opération auquel une instruction de lecture ou d'écriture est attribuée à partir du bloc (290) d'instructions de l'unité (30) de traitement centrale,
Transmettre cette instruction de lecture ou d'écriture à l'unité de traitement centrale, et
Laisser inchangée l'adresse, qui est définie relativement à la première zone de mémoire, dans la circulation de données de l'unité (30) de traitement centrale vers la mémoire (20).

17. Processeur conforme à la revendication 10, pour lequel l'identificateur de code d'opération spécial correspond à une instruction de manipulation d'un pointeur générique, le pointeur générique se composant d'une indication d'adresse et d'une indication du type d'adressage, l'indication d'adresse correspondant à la nouvelle adresse, et l'indication du type d'adressage indiquant que l'indication d'adresse se rapporte à la deuxième zone de mémoire.

18. Processeur conforme à la revendication 17, pour lequel le dispositif (40) de support est disposé pour, au cas où la circulation de données de la mémoire (20) vers l'unité (30) de traitement centrale comprend un identificateur de code d'opération spécial, qui correspond à une instruction de manipulation d'un pointeur générique, qui se compose d'une indication d'adresse et d'une indication du type d'adressage,
Examiner l'indication du type d'adressage,
Au cas où l'indication du type d'adressage indique que l'indication d'adresse se rapporte à la deuxième zone de mémoire, réaliser la formation de la nouvelle adresse, la livraison de l'identificateur de code d'opération prédéterminé et la manipulation de l'adresse, et
Au cas où l'indication du type d'adressage indique que l'indication d'adresse se rapporte à la première zone de mémoire, livrer un identificateur de code d'opération, auquel une instruction est attribuée à partir du bloc (290) d'instructions, qui se rapporte à l'indication d'adresse, à l'unité de traitement centrale.

19. Processeur conforme à l'une des revendications 2 à 8 ou 10 à 18, pour lequel l'unité (30) de traitement centrale présente au moins un registre (260) interne, et le dispositif (40) de support est couplé avec l'unité (30) de traitement centrale, pour déterminer le contenu d'au moins un registre interne, et le dispositif de support est disposé pour, lors de la formation de la nouvelle adresse,
Déterminer le contenu d'au moins un registre interne, et
Former la nouvelle adresse à partir du contenu d'au moins un registre interne.

20. Processeur conforme à l'une des revendications 2 à 8 ou 10 à 18, qui présente au moins un registre (325) de pointeur de données externe, registre qui est disposé en externe par rapport à l'unité de traitement centrale, et processeur pour lequel le dispositif (40) de support est disposé pour, lors de la formation de la nouvelle adresse,
Déterminer le contenu d'au moins un registre (325) de pointeurs de données externe, et
Former la nouvelle adresse à partir du contenu d'au moins un registre (325) de pointeurs de données externe.

21. Processeur conforme à l'une des revendications 2 à 8 ou 10 à 20, pour lequel le dispositif (40) de support est disposé pour, lors de la formation de la nouvelle adresse,
Former la nouvelle adresse au moins partiellement à partir d'une partie d'adresse de l'identificateur de code d'opération.

22. Processeur conforme à la revendication 21, pour lequel le dispositif (40) de support est disposé pour, lors de la formation de la nouvelle adresse à partir au moins partiellement de la partie d'adresse de l'identificateur de code d'opération
Livrer le ou un autre identificateur de code d'opération spécial à l'unité (30) de traitement centrale, et
Processeur pour lequel l'unité (30) de traitement centrale présente un compteur, dans lequel une adresse de code relative à la première zone de mémoire est mémorisée, et l'unité (30) de traitement centrale est disposée pour
Demander un prochain identificateur de code d'opération à traiter au moyen de l'adresse de code, et
En réponse à l'identificateur de code d'opération spécial livré à l'unité (30) de traitement centrale, augmenter le compteur (240) et ignorer sinon l'identificateur de code d'opération spécial livré à l'unité (30) de traitement centrale.

23. Processeur conforme à l'une des revendications 2 à 8 ou 10 à 22, pour lequel le dispositif (40) de support est disposé pour, au cas où l'identificateur (310) de code d'opération spécial est compris dans la circulation de données de la mémoire (20) vers l'unité (30) de traitement centrale,
Arrêter les signaux d'interruption arrivant.
